# EUROPÄISCHE PATENTSCHRIFT

(11) **EP 3 734 864 B1**
(45) Veröffentlichungstag und Bekanntmachung des Hinweises auf die Patenterteilung: **16.03.2022**
(21) Anmeldenummer: 20170710.6
(22) Anmeldetag: 21.04.2020
(51) Int. Cl.: H04B 17/10, H04Q 9/00

(54) **ERKENNUNG EINES BETRIEBSZUSTANDS EINES DATENSENDERS DURCH ÜBERWACHUNG VON UMWELTPARAMETERN**
DETECTION OF AN OPERATING STATE OF A DATA TRANSMITTER BY MONITORING ENVIRONMENTAL PARAMETERS
DÉTECTION D'UN ÉTAT DE FONCTIONNEMENT D'UN ÉMETTEUR DE DONNÉES PAR SURVEILLANCE DES PARAMÈTRES ENVIRONNEMENTAUX

(30) Priorität: 29.04.2019 DE 102019206116
(43) Veröffentlichungstag der Anmeldung: 04.11.2020
(73) Patentinhaber: Diehl Metering GmbH, 91522 Ansbach (DE)
(72) Erfinder: Kilian, Gerd, 91056 Erlangen (DE); Bernhard, Josef, 92507 Nabburg (DE); Kauppert, Thomas, 90455 Nürnberg (DE); Petkov, Hristo, 90425 Nürnberg (DE); Wechsler, Johannes, 91174 Spalt (DE); Kneißl, Jakob, 90765 Fürth (DE); Mzyk, Raphael, 91126 Kammerstein (DE); Soller, Dominik, 90571 Schwaig (DE); Psiuk, Rafael, 90429 Nürnberg (DE)
(74) Vertreter: Diehl Patentabteilung

(56) Entgegenhaltungen:
- US-A1- 2016 283 343

## Beschreibung

Ausführungsbeispiele der vorliegenden Erfindung beziehen sich auf einen Datenempfänger eines Kommunikationssystems, und im speziellen, auf einen Datenempfänger, der einen Betriebszustand bzw. eine Abweichung von einem Soll-Betriebszustand eines Datensenders durch Überwachung von Umweltparametern des Datensenders oder einer Umgebung des Datensenders erkennt. Manche Ausführungsbeispiele beziehen sich auf eine Erkennung von Fehlern einer Installation oder im Betrieb durch Monitoring von Umweltparametern.

Herkömmlicherweise werden zur Bestimmung von Umweltparametern, wie z.B. Temperatur, Druck, Luftfeuchtigkeit, usw., Sensorknoten eingesetzt, die einen Sensor für den zu bestimmenden Umweltparameter aufweisen. Der mit dem Sensor bestimmte Sensorwert, der den Umweltparameter in der Umgebung des Sensorknotens beschreibt, wird von dem Sensorknoten in gewissen Zeitabständen (z.B. regelmäßig oder periodisch) oder auf Anfrage mittels eines Signals, das den Sensorwert und ggf. weitere Nutzdaten aufweist, zu einem Datenempfänger, wie z.B. einer Basisstation im Falle eines Sensorsystems mit einer großen Anzahl an Sensorknoten, übertragen.

Aus Kostengründen sind die in den Sensorknoten eingesetzten Sensoren jedoch meist sehr ungenau. Zudem ist es erforderlich weitere Sensorknoten vorzusehen, falls die vorhandenen Sensorknoten keinen Sensor für den gewünschten Umweltparameter aufweisen.

Aus der US 2016/0283343 A1 ist ein Datenempfänger zum Empfang von Umweltdaten bekannt. Der dort beschriebene Datenempfänger ist Bestandteil eines Systems zur Überwachung der Umweltparameter eines Computer-Racks. Das System umfasst Sensoren, die den jeweiligen Computern zugeordnet sind und Umweltparameter, wie z.B. die Temperatur, den Verbrauch an elektrischer Energie, die Luftströmung, die Systembelastung oder andere die Rechenleistung beeinflussende Parameter, messen. Die Messdaten der jeweiligen Sensoren werden an das System zur Überwachung der Umweltparameter des Computer-Racks übermittelt und dort mit "erwarteten Daten" verglichen. Das System umfasst ein Display auf dem die gemessenen Umweltparameter entsprechend der dargestellten Anordnung der Computer des Computer-Racks in räumlicher Trennung visualisiert werden. Als Resultat des Vergleichs können z. B. Warnhinweise ausgegeben, die ebenfalls auf einem Display angezeigt werden. Der vorliegenden Erfindung liegt die Aufgabe zugrunde, die bestehende Situation zu verbessern.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datenempfänger, wobei der Datenempfänger konfiguriert ist, um zumindest ein Signal [z.B. ein Signal oder eine Mehrzahl von Signalen] eines Datensenders zu empfangen, um zumindest einen Umweltparameter [z.B. einen Umweltparameter oder eine Mehrzahl von Umweltparametern; z.B. eine Temperatur oder mehrere Temperaturen] des Datensenders oder einer Umgebung des Datensenders zu erhalten [z.B. zu empfangen und/oder zu ermitteln], wobei der Datenempfänger konfiguriert ist, um basierend auf einem Vergleich zwischen
- dem zumindest einen erhaltenen Umweltparameter oder einem basierend auf dem zumindest einen erhaltenen Umweltparameter ermittelten Umweltparameterverlauf [z.B. ermittelten Temperaturverlauf], und
- einem Umweltparameterreferenzprofil, das einen erwarteten Umweltparameter oder einen erwarteten Umweltparameterverlauf [z.B. erwarteten Temperaturverlauf] [z.B. über einen Zeitraum] in der Umgebung des Datensenders beschreibt,
einen Betriebszustand [z.B. einen fehlerfreien oder einen fehlerbehafteten Betriebszustand] des Datensenders oder einer Komponente [z.B. einer Batterie] des Datensenders zu erkennen [z.B. zu ermitteln].

Bei Ausführungsbeispielen kann der ermittelte Umweltparameterverlauf ferner auf [z.B. zeitlich] zumindest einem zuvor erhaltenen [z.B. empfangenen und/oder ermittelten] Umweltparameter basieren.

Erfindungsgemäß weist eine Signal den jeweiligen Umweltparameter in einer modulierten Primärinformation auf, wobei der Datenempfänger konfiguriert ist, um den jeweiligen Signalparameter aus der modulierten Primärinformation zu extrahieren [z.B. durch demodulieren und decodieren], um den zumindest einen Umweltparameter zu erhalten.

Beispielsweise kann das zumindest eine Signal ein Datenpaket aufweisen, wobei das Datenpaket den jeweiligen Umweltparameter oder eine Information über den jeweiligen Umweltparameter aufweist.

Bei Ausführungsbeispielen kann das zumindest eine Signal oder eine Erzeugung des zumindest einen Signals von einem Taktsignal eines Taktgebers [z.B. eines Frequenzgebers, wie z.B. Oszillators bzw. Quarzes] des Datensenders abhängig sein, wobei der Datenempfänger konfiguriert ist, um einen Signalparameter [z.B. eine Signaleigenschaft] des jeweiligen Signals zu ermitteln [z.B. auszuwerten], und um basierend auf dem Signalparameter den jeweiligen Umweltparameter [z.B. Temperatur oder Temperaturänderung] zu ermitteln [z.B. zu schätzen], dem der Taktgeber des Datensenders oder das jeweilige Signal ausgesetzt ist.

Bei Ausführungsbeispielen kann der Datenempfänger konfiguriert sein, um den zumindest einen aus der modulieren Primärinformation extrahieren Umweltparameter und den zumindest einen basierend auf dem Signalparameter ermittelten Umweltparametern zu kombinieren, um zumindest einen kombinieren Umweltparameter zu erhalten, wobei der Datenempfänger konfiguriert sein kann, um basierend auf einem Vergleich zwischen
- dem zumindest einen kombinieren Umweltparameter oder einem basierend auf dem zumindest einen kombinierten Umweltparameter ermittelten Umweltparameterverlauf [z.B. ermittelten Temperaturverlauf], und
- dem Umweltparameterreferenzprofil, das den erwarteten Umweltparameter oder den erwarteten Umweltparameterverlauf [z.B. erwarteten Temperaturverlauf] in der Umgebung des Datensenders beschreibt,
einen Betriebszustand des Datensenders oder einer Komponente des Datensenders zu erkennen.

Bei Ausführungsbeispielen kann das Umweltparameterreferenzprofil im Vorfeld ermittelt sein.

Beispielsweise kann das Umweltparameterreferenzprofil während der Herstellung des Datensenders ermittelt werden.

Bei Ausführungsbeispielen kann der Datenempfänger konfiguriert sein, um das Umweltparameterreferenzprofil basierend auf zuvor erhaltenen Umweltparametern anzupassen [z.B. zu aktualisieren].

Bei Ausführungsbeispielen kann der Datenempfänger konfiguriert sein, um das Umweltparameterreferenzprofil basierend auf erhaltenen Umweltparametern eines anderen Datensenders oder einer Gruppe von anderen Datensendern zu generieren.

Beispielsweise kann der Datenempfänger konfiguriert sein, um über einen Zeitraum Umweltparameter eines anderen Datensenders oder eine Gruppe von anderen Datensendern zu sammeln, und um basierend auf den Umweltparametern das Umweltparameterreferenzprofil zu ermitteln [z.B. basierend auf statistischen Verfahren, beispielsweise durch Mittelwertbildung und/oder Interpolation].

Bei Ausführungsbeispielen kann der Datenempfänger konfiguriert sein, um basierend auf dem Vergleich einen fehlerhaften Betriebszustand des Datensenders oder einer Komponente des Datensenders zu erkennen.

Beispielsweise kann eine zu große Abweichung [eine Abweichung, die größer oder gleich einem vorgegebenen Schwellwert ist] zwischen
- dem zumindest einen erhaltenen Umweltparameter oder dem basierend auf dem zumindest einen erhaltenen Umweltparameter ermittelten Umweltparameterverlauf [z.B. ermittelten Temperaturverlauf], und
- dem Umweltparameterreferenzprofil, das den erwarteten Umweltparameter oder den erwarteten Umweltparameterverlauf [z.B. erwarteten Temperaturverlauf] [z.B. über einen Zeitraum] in der Umgebung des Datensenders beschreibt,
auf einen fehlerhaften Betriebszustand des Datensenders oder einer Komponente [z.B. einer Batterie] des Datensenders hindeuten].

Bei Ausführungsbeispielen kann der Datenempfänger konfiguriert sein, um basierend auf dem Vergleich eine Lebensdauer einer Komponente [z.B. Batterielebensdauer] des Datensenders zu schätzen.

Bei Ausführungsbeispielen kann der Datenempfänger ferner konfiguriert sein, um zumindest einen Signalparameter des zumindest einen Signals zu ermitteln, wobei der Datenempfänger konfiguriert sein kann, um basierend auf einem Vergleich zwischen
- dem zumindest einen ermittelten Signalparameter oder einem basierend auf dem zumindest einen ermittelten Signalparameter ermittelten Signalparameterverlauf, und
- einem Signalparameterreferenzprofil, das einen erwarteten Signalparameter oder einen erwarteten Signalparameterverlauf [z.B. über einen Zeitraum] beschreibt, den Betriebszustand [z.B. einen fehlerfreien oder einen fehlerbehafteten Betriebszustand] des Datensenders oder einer Komponente [z.B. einer Batterie] des Datensenders zu erkennen.

Bei Ausführungsbeispielen kann der ermittelte Signalparameterverlauf ferner auf [z.B. zeitlich] zumindest einem zuvor ermittelten Signalparameter basieren.

Bei Ausführungsbeispielen kann das zumindest eine Signal oder eine Erzeugung des zumindest einen Signals von einem Taktsignal eines Taktgebers [z.B. eines Frequenzgebers, wie z.B. Oszillators bzw. Quarzes] des Datensenders abhängig sein, wobei der Datenempfänger konfiguriert ist, um einen Signalparameter [z.B. eine Trägerfrequenz] über das jeweilige Signal [z.B. während des Empfangs des jeweiligen Signals] mehrfach zu ermitteln, um einen Verlauf des Signalparameters zu ermitteln, und um basierend auf dem ermittelten Verlauf des Signalparameters den Umweltparameterverlauf zu ermitteln [z.B. zu schätzen], dem der Taktgeber des Datensenders oder das jeweilige Signal ausgesetzt ist, wobei der Datenempfänger konfiguriert sein kann, um basierend auf dem Vergleich zwischen
- dem ermittelten Umweltparameterverlauf, und
- dem Umweltparameterreferenzprofil, das einen erwarteten Umweltparameterverlauf während der Aussendung des jeweiligen Signals beschreibt,
den Betriebszustand [z.B. einen fehlerfreien oder einen fehlerbehafteten Betriebszustand] des Datensenders oder der Komponente des Datensenders zu erkennen.

Bei Ausführungsbeispielen kann das Umweltparameterreferenzprofil Verzögerungen in einer Auswirkung von Umweltparameteränderungen auf den Taktgeber berücksichtigen.

Bei Ausführungsbeispielen kann der Datenempfänger konfiguriert sein, um einen Signalparameter des jeweiligen Signals zu ermitteln, und um basierend auf dem ermittelten Signalparameter oder einer Veränderung des Signalparameters eine auf dem Datensender verbaute Komponente [z.B. Baustein, z.B. Frequenzquarz, Zeitquarz, PLL Schleife] zu ermitteln.

Beispielsweise kann basierend auf dem ermittelten Signalparameter oder der Veränderung des Signalparameters ermittelt werden, welche Komponente, z.B. welcher bzw. was für ein Quarz, auf dem Datensender verbaut sind.

Bei Ausführungsbeispielen kann das zumindest eine Signal in einer modulierten Primärinformation eine Information über die verbaute Komponente aufweisen, wobei der Datenempfänger konfiguriert sein kann, um basierend auf der Information über die verbaute Komponente eine Gegenprobe mit der über den Signalparameter oder die Veränderung des Signalparameters ermittelten verbauten Komponente durchzuführen.

Bei Ausführungsbeispielen kann der Datenempfänger konfiguriert sein, um basierend auf der ermittelten verbauten Komponente eine Manipulation oder Fehlinstallation des Datensenders zu erkennen.

Erfindungsgemäß ist der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben.

Bei Ausführungsbeispielen kann der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben sein.

Bei Ausführungsbeispielen kann der Datenempfänger ein Datenempfänger eines drahtlosen Kommunikationssystems sein.

Bei Ausführungsbeispielen kann der Datenempfänger eine Basisstation sein.

Bei Ausführungsbeispielen kann der Datensender ein Sensorknoten sein.

Weitere Ausführungsbeispiele schaffen einen Datenempfänger, wobei der Datenempfänger konfiguriert ist, um zumindest ein Signal eines Datensenders zu empfangen, wobei das zumindest eine Signal jeweils in einer modulierten Primärinformation einen von dem Datensender [z.B. mittels eines Sensors] gemessenen Umweltparameter aufweist, wobei der Datenempfänger konfiguriert ist, um den jeweiligen gemessenen Umweltparameter aus der jeweiligen modulierten Primärinformation zu extrahieren [z.B. durch demodulieren und decodieren], um zumindest einen gemessenen Umweltparameter zu erhalten, wobei das zumindest eine Signal oder eine Erzeugung des zumindest einen Signals von einem Taktsignal eines Taktgebers [z.B. eines Frequenzgebers, wie z.B. Oszillators bzw. Quarzes] des Datensenders abhängig ist, wobei der Datenempfänger konfiguriert ist, um jeweils einen Signalparameter [z.B. eine Signaleigenschaft] des zumindest einen Signals zu ermitteln [z.B. auszuwerten], und um basierend auf dem jeweiligen Signalparameter einen jeweiligen Umweltparameter [z.B. Temperatur oder Temperaturänderung] zu schätzen, dem der Taktgeber des Datensenders oder das jeweilige Signal ausgesetzt ist, um zumindest einen geschätzten Umweltparameter zu erhalten, wobei der Datenempfänger konfiguriert, um basierend auf einem Vergleich zwischen dem zumindest einem gemessenen Umweltparameter und dem zumindest einen geschätzten Umweltparameter einen Betriebszustand [z.B. einen fehlerfreien oder einen fehlerbehafteten Betriebszustand] des Datensenders oder einer Komponente [z.B. einer Batterie] des Datensenders zu erkennen [z.B. zu ermitteln].

Weitere Ausführungsbeispiele schaffen ein Verfahren zum Ermitteln eines Betriebszustandes eines Datensenders oder einer Komponente des Datensenders. Das Verfahren umfasst einen Schritt des Empfangens zumindest eines Signals eines Datensenders, um zumindest einen Umweltparameter des Datensenders oder einer Umgebung des Datensenders zu erhalten. Ferner umfasst das Verfahren einen Schritt des Ermittelns eines Betriebszustands des Datensenders oder einer Komponente des Datensenders basierend auf einem Vergleich zwischen
- dem zumindest einen Umweltparameter oder einem basierend auf dem zumindest einem Umweltparameter ermittelten Umweltparameterverlauf, und
- einem Umweltparameterreferenzprofil, das einen erwarteten Umweltparameter oder einen erwarteten Umweltparameterverlauf in der Umgebung des Datensenders beschreibt.

Bei Ausführungsbeispielen kann der Schritt des Empfangens des zumindest einen Signals von einer Basisstation eines Kommunikationssystems durchgeführt werden.

Bei Ausführungsbeispielen der Schritt des Ermittelns der Abweichung des Datensenders von einem Sollbetriebszustand von dem Datenempfänger oder einem Server [z.B. Head End] des Kommunikationssystems durchgeführt werden.

Weitere Ausführungsbeispiele schaffen ein Verfahren zum Ermitteln eines Betriebszustandes eines Datensenders oder einer Komponente des Datensenders. Das Verfahren umfasst einen Schritt des Empfangen zumindest eines Signals eines Datensenders, wobei das zumindest eine Signal oder eine Erzeugung des zumindest einen Signals von einem Taktsignal eines Taktgebers des Datensenders abhängig ist, wobei das zumindest eine Signal in einer modulierten Primärinformation einen von dem Datensender gemessenen Umweltparameter aufweist. Ferner umfasst das Verfahren einen Schritt des Extrahierens des gemessenen Umweltparameter aus der modulierten Primärinformation des zumindest einen Signals, um zumindest einen gemessenen Umweltparameter zu erhalten. Ferner umfasst das Verfahren einen Schritt des Ermittelns eines Signalparameters des zumindest einen Signals. Ferner umfasst das Verfahren einen Schritt des Schätzens eines Umweltparameters, dem der Taktgeber des Datensenders oder das jeweilige Signal ausgesetzt ist, basierend auf dem ermittelten Signalparameter, um zumindest einen geschätzten Umweltparameter zu erhalten. Ferner umfasst das Verfahren einen Schritt des Vergleichens des zumindest einem gemessenen Umweltparameters und des zumindest einen geschätzten Umweltparameters, um einen Betriebszustand des Datensenders oder einer Komponente des Datensenders zu erkennen.

Weitere Ausführungsbeispiele schaffen einen Server, wobei der Server konfiguriert ist, um zumindest einen Umweltparameter [z.B. Temperatur] eines Datensender oder einer Umgebung des Datensenders zu erhalten, wobei der Server konfiguriert ist, um basierend auf einem Vergleich zwischen
- dem zumindest einen Umweltparameter oder einem basierend auf dem zumindest einem Umweltparameter ermittelten Umweltparameterverlauf, und
- einem Referenzprofil, das einen erwarteten Umweltparameterverlauf in der Umgebung des Datensenders beschreibt,
- einen Betriebszustand [z.B. einen fehlerfreien oder einen fehlerbehafteten Betriebszustand] des Datensenders oder einer Komponente [z.B. einer Batterie] des Datensenders zu erkennen.

Ausführungsbeispiele ermöglichen es durch eine Überwachung von Umweltparametern Datensender (z.B. Sensorknoten) zu erkennen, die defekt sind oder defekte Komponenten aufweisen, an falschen Stellen installiert sind, oder falsche Firmware oder Hardware aufweisen.

Bei Ausführungsbeispielen werden verfügbare Sendeparameter genutzt.

Bei Ausführungsbeispielen werden Kurzzeit- oder Langzeitprofile gespeichert.

Bei Ausführungsbeispielen werden (z.B. ermittelte Umweltparameter) unterschiedlicher Konten miteinander verglichen und adaptive Profile generiert.

Bei Ausführungsbeispielen werden unterschiedliche Profile für unterschiedliche Tages- und/oder Jahreszeitengenutzt.

Bei Ausführungsbeispielen kann ein defekt erkannt werden, wenn z.B. ein Profil (ermittelter Umweltparameterverlauf) einen Schwellwert überschreitet.

Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers [z.B. eines Frequenzgebers, wie z.B. Oszillators bzw. Quarzes] des Datensenders abhängig ist, wobei der Datenempfänger ausgebildet ist, um einen Signalparameter [z.B. eine Signaleigenschaft] des Signals zu ermitteln [z.B. auszuwerten], und um basierend auf dem Signalparameter einen Umweltparameter [z.B. eine Temperatur oder Temperaturänderung] zu ermitteln [z.B. zu schätzen], dem der Taktgeber des Datensenders oder das Signal ausgesetzt ist.

Der vorliegenden Erfindung liegt die Idee zugrunde, Umweltparameter [z.B. Temperatur, Druck, Luftfeuchtigkeit oder eine Änderung derselben] durch Auswertung von Empfangsparametern zu bestimmen. Die Signalparameter des empfangenen Signals (Empfangsparameter) hängen von einem Taktsignal eines Taktgebers [z.B. einer Frequenz eines Frequenzgebers] ab, basierend auf dem der Datensender das Signal erzeugt, wobei das von dem Taktgeber des Datensenders bereitgestellte Taktsignal von den Umweltparametern in der Umgebung des Datensenders abhängig ist.

Bei Ausführungsbeispielen kann der Signalparameter von einem Modulationsinhalt des Signals unabhängig sein.

Bei Ausführungsbeispielen kann das Signal ein digital moduliertes Signal sein, wobei der Datenempfänger ausgebildet sein kann, um einen analogen Signalparameter [z.B. eine analoge Signaleigenschaft] des digital modulierten Signals zu ermitteln.

Beispielsweise kann der Signalparameter von einem Modulationsinhalt des digital modulierten Signals unabhängig sein.

Bei Ausführungsbeispielen kann der Datenempfänger ausgebildet sein, um für die Ermittlung des Signalparameters bekannte Symbole [z.B. Pilotsymbole] in dem Signal zu verwenden.

Bei Ausführungsbeispielen können die bekannten Symbole in Gruppen aufgeteilt sein, wobei sich die Gruppen von Symbolen an verschiedenen Stellen des Signals [z.B. am Anfang und am Ende] befinden können.

Bei Ausführungsbeispielen kann der Datenempfänger ausgebildet sein, um für die Ermittlung des Signalparameters mindestens 4 bekannte Symbole, vorzugsweise 20 bekannte Symbole und besonders vorzugsweise 40 bekannte Symbole zu verwenden.

Bei Ausführungsbeispielen kann das Signal eine Mehrzahl von Sub-Datenpaketen aufweisen, wobei die bekannten Symbole über mehrere Sub-Datenpakete verteilt sind.

Bei Ausführungsbeispielen kann der Datenempfänger ausgebildet sein, um für die Ermittlung des Signalparameters keine bekannten Symbole zu verwenden.

Bei Ausführungsbeispielen kann das Signal neben einer modulierten Primärinformation [erfindungsgemäß repräsentiert Letztere eine ID des Datensenders, eine Synchronisationssequenz, Nutzdaten und/oder Dummy-Daten] eine Information über den Umweltparameter in dem Signalparameter aufweisen.

Bei Ausführungsbeispielen kann das Signal in gewissen Zeitabständen [z.B. gleichen oder ungleichen Zeitabständen] ausgesendet werden, wobei eine Aussendung des Signals oder eine echte Teilmenge der Aussendungen des Signals zusätzlich eine Information über den Umweltparameter [z.B. eine sensorisch bestimmte Version des Umweltparameters] in der modulierten Primärinformation aufweisen kann, wobei der Datenempfänger ausgebildet sein kann, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren.

Beispielsweise kann der Datenempfänger ausgebildet sein, um das Signal in einer Mehrzahl von Zeitabschnitten einer Abfolge von Zeitabschnitten zu empfangen, wobei das in einer ersten Teilmenge von Zeitabschnitten der Abfolge von Zeitabschnitten empfangene Signal zusätzlich eine Information über den Umweltparameter [z.B. eine sensorisch bestimmte Version des Umweltparameters] in der modulierten Primärinformation aufweist, wobei der Datenempfänger ausgebildet ist, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren, wobei das in einer zweiten Teilmenge von Zeitabschnitten der Abfolge von Zeitabschnitten empfangene Signal in der modulierten Primärinformation keine Information über den Umweltparameter enthält, wobei die erste Teilmenge von Zeitabschnitten und die zweite Teilmenge von Zeitabschnitten disjunkt sind.

Bei Ausführungsbeispielen kann die modulierte Primärinformation keine Information über den Umweltparameter enthalten.

Bei Ausführungsbeispielen kann der Datenempfänger ausgebildet sein, um den Umweltparameter basierend auf einer Abbildungsfunktion aus dem Signalparameter zu ermitteln.

Bei Ausführungsbeispielen kann dem Datenempfänger die Abbildungsfunktion bekannt sein.

Bei Ausführungsbeispielen kann der Datenempfänger ausgebildet sein, um die Abbildungs- funktion basierend auf zumindest einer von einem Sensor bestimmten Information über den Umweltparameter zu kalibrieren.

Bei Ausführungsbeispielen kann der Datenempfänger ausgebildet sein, um die Abbildungs- funktion basierend auf zumindest zwei von einem Sensor bestimmten Informationen über den Umweltparameter zu ermitteln.

Bei Ausführungsbeispielen kann der Datenempfänger ausgebildet sein, um die Abbildungs- funktion basierend auf einer Polynomapproximation in Abhängigkeit von den zumindest zwei von dem Sensor bestimmten Informationen über den Umweltparameter zu ermitteln.

Bei Ausführungsbeispielen kann der Datenempfänger ausgebildet sein, um die Abbildungs- funktion basierend auf zumindest einer von einem Sensor bestimmten Information über den Umweltparameter aus einem Satz von Abbildungsfunktionen auszuwählen.

Bei Ausführungsbeispielen kann der Datenempfänger ausgebildet sein, um einen Mittelwert und eine Streuung über zumindest zwei von dem Sensor bestimmten Informationen über den Umweltparameter zu ermitteln, wobei der Datenempfänger ausgebildet sein kann, um die Abbildungsfunktion basierend auf dem Mittelwert und der Streuung aus dem Satz von Abbildungsfunktionen auszuwählen.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] die zumindest eine von dem Sensor bestimmte Information über den Umweltparameter aufweist.

Bei Ausführungsbeispielen kann die Abbildungsfunktion eine Temperaturkurve des Taktgebers des Datensenders sein.

Bei Ausführungsbeispielen kann das Signal in gewissen Zeitabständen [z.B. gleichen oder ungleichen Zeitabständen] ausgesendet werden, wobei der Datenempfänger ausgebildet sein kann, um basierend auf zumindest zwei Aussendungen des Signals zumindest zwei Signalparameter zu ermitteln, wobei der Datenempfänger ausgebildet sein kann, um den Umweltparameter basierend auf den zumindest zwei Signalparametern zu ermitteln.

Bei Ausführungsbeispielen kann der Datenempfänger ausgebildet sein, um die zumindest zwei Signalparameter zu kombinieren [z.B. durch Differenzbildung], um ein kombinierten Signalparameter zu erhalten, wobei der Datenempfänger ausgebildet sein kann, um den Umweltparameter basierend auf dem kombinierten Signalparameter zu ermitteln.

Bei Ausführungsbeispielen kann der Datenempfänger ausgebildet sein, um zumindest zwei Signalparameter [z.B. Frequenz und Modulationsfehler] des Signals zu ermitteln, wobei der Datenempfänger ausgebildet sein kann, um basierend auf den zumindest zwei Signalparametern jeweils einen Umweltparameter [z.B. eine Temperatur oder Temperaturänderung] zu ermitteln [z.B. zu schätzen], dem der Taktgeber des Datensenders oder das Signal ausgesetzt ist.

Beispielsweise kann der Datenempfänger basierend auf den zumindest zwei Signalparametern gleiche Umweltparameter [z.B. Temperaturen oder Temperaturdifferenzen] oder unterschiedliche Umweltparameter [z.B. Temperatur und Druck, oder Temperaturdifferenz und Druckdifferenz] ermitteln.

Bei Ausführungsbeispielen kann der Datenempfänger ausgebildet sein, um die ermittelten Umweltparameter zu kombinieren [z.B. durch Mittelwertbildung], um einen kombinierten Umweltparameter zu erhalten.

Bei Ausführungsbeispielen kann das Signal oder eine Erzeugung des Signals ferner von einem weiteren Taktsignal eines weiteren Taktgebers [z.B. Frequenzgeber und Zeitgeber] des Datensenders abhängig sein, wobei der Datenempfänger ausgebildet sein kann, um zwei Signalparameter des Signals zu ermitteln, und um den Umweltparameter basierend auf den zwei Signalparametern zu ermitteln.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] eine Information über eine Abweichung der zwei Taktgeber des Datensenders aufweist, wobei der Datenempfänger ausgebildet sein kann, um die Ermittlung des Umweltparameters basierend auf der Abweichung der zwei Taktgeber des Datensenders zu kalibrieren.

Beispielsweise kann die Abweichung der zwei Taktgeber des Datensenders die aktuelle Differenz der Frequenzen der zwei Taktgeber angegeben. Zum Beispiel können die beiden Taktgeber [z.B. Quarze] gegeneinander vermessen werden, um einen Wert [z.B. in ppm, wie z.B. 20 ppm] festzustellen, der angibt, um wieviel die beiden Taktgeber auseinanderlaufen. Der Wert kann mitgesendet werden. Der Datenempfänger [z.B. Basisstation] kann die Zeit [Empfangszeitpunkt] und Frequenz [Empfangsfrequenz] schätzen und die Information, um die Quarztemperaturkurven des Zeitquarzes oder des Frequenzquarzes am Knoten zu bestimmen/kalibrieren.

Bei Ausführungsbeispielen kann der Datenempfänger ausgebildet sein, um ein weiteres Signal von einem weiteren Datensender zu empfangen, wobei das weitere Signal oder eine Erzeugung des weiteren Signals von einem Taktsignal eines Taktgebers des weiteren Datensenders abhängig ist, wobei der Datensender und der weitere Datensender im Wesentlichen dem gleichem Umweltparameter ausgesetzt sind [z.B. im gleichen Raum angeordnet sind], wobei der Datenempfänger ausgebildet sein kann, um einen weiteren Signalparameter des weiteren Signals zu ermitteln, und um den Umweltparameter basierend auf dem Signalparameter und dem weiteren Signalparameter zu ermitteln.

Bei Ausführungsbeispielen kann der Datenempfänger ausgebildet sein, um den Signalparameter und den weiteren Signalparameter zu kombinieren, um einen kombinierten Signalparameter zu erhalten, und um den Umweltparameter basierend auf dem kombinierten Signalparameter zu ermitteln.

Bei Ausführungsbeispielen können der Signalparameter und der weitere Signalparameter einzeln die Ermittlung eines relativen Umweltparameters [z.B. Temperaturänderungen] ermöglichen, wobei der Datenempfänger ausgebildet sein kann, um basierend auf dem Signalparameter und dem weiteren Signalparameter in Kombination einen absoluten Umweltparameter zu ermitteln.

Bei Ausführungsbeispielen können der Datensender und der weitere Datensender unterschiedlichen Funksystemen angehörig sein [z.B. Datensender unterschiedlicher Funksysteme sind].

Bei Ausführungsbeispielen kann das Taktsignal des Taktgebers von dem Umweltparameter abhängig sein.

Bei Ausführungsbeispielen kann der Datenempfänger ausgebildet sein, um einen altersbedingten Einfluss des Taktgebers auf den Signalparameter zu kompensieren.

Beispielsweise kann dem Datenempfänger der altersbedingte Einfluss des Taktgebers auf den Signalparameter bekannt sein. Ferner oder alternativ kann der Datenempfänger ausgebildet sein, um den altersbedingten Einfluss des Taktgebers auf den Signalparameter zu ermitteln bzw. zu schätzen, z.B. basierend auf zumindest zwei aufeinanderfolgenden empfangen Signalen des Datensenders.

Bei Ausführungsbeispielen kann der Datenempfänger ausgebildet sein, um einen exemplarstreuungsbedingten Einfluss des Taktgebers auf den Signalparameter zu kompensieren.

Bei Ausführungsbeispielen ist erfindungsgemäß der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben.

Bei Ausführungsbeispielen kann der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben ist.

Weitere Ausführungsbeispiele schaffen ein System mit einem Datenempfänger gemäß einem der hierin beschriebenen Ausführungsbeispiele und einem Datensender, wobei der Datensender ausgebildet sein kann, um das Signal zu senden, wobei das Signal oder die Erzeugung des Signals von dem Taktsignal des Taktgebers des Datensenders abhängig ist.

Bei Ausführungsbeispielen kann der Datensender ausgebildet sein, um das Signal in gewissen Zeitabständen [z.B. gleichen oder ungleichen Zeitabständen] zu senden, wobei der Datensender ausgebildet sein kann, um zumindest eine Aussendung des Signals oder eine echte Teilmenge der Aussendungen des Signals mit einer von einem Sensor bestimmten Information über den Umweltparameter zu versehen.

Weitere Ausführungsbeispiele schaffen ein Verfahren. Das Verfahren umfasst einen Schritt des Empfangens eines Signals eines Datensenders, wobei das Signal oder eine Erzeugung des Signals von einem Taktsignal eines Taktgebers [z.B. eines Frequenzgebers, wie z.B. Oszillators bzw. Quarzes] des Datensenders abhängig ist. Das Verfahren umfasst ferner einen Schritt des Ermittelns [z.B. Schätzens] eines Signalparameters [z.B. eine Signaleigenschaft] des empfangenen Signals. Das Verfahren umfasst ferner einen Schritt des Ermittelns eines Umweltparameters [z.B. eine Temperatur oder Temperaturänderung], dem der Taktgeber des Datensenders oder das Signal ausgesetzt ist, basierend auf dem ermittelten Signalparameter.

Bei Ausführungsbeispielen kann ein Einfluss der Umwelt auf den Taktgeber des Datensenders mindestens um den Faktor zwei oder bevorzugt um den Faktor vier größer sein als ein Einfluss der Umwelt auf einen Taktgeber eines Datenempfängers, der das Signal des Datensenders empfängt.

Bei Ausführungsbeispielen kann ein Einfluss der Umwelt auf einen Taktgeber eines Datenempfängers, der das Signals des Datensenders empfängt, mindestens um den Faktor zwei oder bevorzugt um den Faktor vier größer sein als ein Einfluss der Umwelt auf den Taktgeber des Datensenders.

Weitere Ausführungsbeispiele schaffen ein Verfahren zum Ermitteln von Umweltparametern eines Bereichs (z.B. eines Gebiets oder Gebäudes). Das Verfahren umfasst einen Schritt des Empfangens einer Mehrzahl von Signalen von einer Mehrzahl von Datensendern, die in dem Bereich angeordnet sind, wobei die Mehrzahl von Signalen von Taktsignalen von Taktgebern der jeweiligen Datensender abhängig sind. Das Verfahren umfasst ferner einen Schritt des Ermittelns von Signalparametern (z.B. Signaleigenschaften, wie z.B. Trägerfrequenzen oder Trägerfrequenzabweichungen) der Mehrzahl von empfangenen Signalen. Das Verfahren umfasst ferner einen Schritt des Ermittelns von zumindest einem Umweltparameter des Bereichs, dem die Taktgeber der Datensender ausgesetzt sind, basierend auf den ermittelten Signalparametern.

Bei Ausführungsbeispielen können die Signalparameter von Modulationsinhalten der Mehrzahl von Signalen unabhängig sein.

Bei Ausführungsbeispielen können die Mehrzahl von Signalen digital modulierte Signale sein, wobei beim Ermitteln von Signalparametern analoge Signalparameter der Mehrzahl von digital modulierten Signalen ermittelt werden.

Beispielsweise können die analogen Signalparameter von Modulationsinhalten der Mehrzahl von digital modulierten Signalen unabhängig sein.

Bei Ausführungsbeispielen können die Mehrzahl von Signalen neben jeweiligen modulierten Primärinformationen [z.B. IDs der jeweiligen Datensender, Synchronisationssequenzen, Nutzdaten und/oder Dummy-Daten] Informationen über den zumindest einen Umweltparameter des Bereichs in den jeweiligen Signalparametern aufweisen.

Bei Ausführungsbeispielen kann das Verfahren einen Schritt des Kombinierens der ermittelten Signalparameter aufweisen, um zumindest einen kombinierten Signalparameter zu erhalten, wobei der zumindest eine Umweltparameter basierend auf dem zumindest einem kombinierten Signalparameter ermittelt wird.

Bei Ausführungsbeispielen können beim Kombinieren der ermittelten Signalparameter zumindest zwei Gruppen [z.B. echte Teilmengen [z.B. disjunkte oder sich überlappende Teilmengen]] von Signalparametern kombiniert werden, um für die zumindest zwei Gruppen von Signalparametern zumindest zwei kombinierte Signalparameter zu erhalten, wobei der zumindest eine Umweltparameter des Bereichs basierend auf den zumindest zwei kombinierten Signalparametern ermittelt wird.

Beispielsweise können zumindest zwei Gruppen von unterschiedlichen Signalparametern [z.B. erste Gruppe: Trägerfrequenzen (oder Trägerfrequenzabweichungen); zweite Gruppe: Signalleistungen] kombiniert werden, um zumindest zwei unterschiedliche kombinierte Signalparameter zu erhalten. Natürlich können auch zumindest zwei Gruppen von gleichen Signalparametern [z.B. erste Gruppe: Trägerfrequenzen (oder Trägerfrequenzabweichungen); zweite Gruppe: Trägerfrequenzen (oder Trägerfrequenzabweichungen)] kombiniert werden, um zumindest zwei gleiche kombinierte Signalparameter zu erhalten.

Beispielsweise kann für jeden der zumindest zwei kombinierten Signalparameter ein Umweltparameter des Bereichs ermittelt werden, um zumindest zwei Umweltparameter [z.B. unterschiedliche Umweltparameter [z.B. Temperatur, Luftdruck, Luftfeuchtigkeit] oder gleiche Umweltparameter [z.B. Temperaturen, Luftdrücke, Luftfeuchtigkeiten]] des Bereichs zu erhalten. Optional können die zumindest zwei Umweltparameter [z.B. im Falle von gleichen Umweltparametern] kombiniert werden, um einen kombinierten Umweltparameter zu erhalten. Natürlich können auch (jeweils) mehrere (unterschiedliche) Umweltparameter basierend auf den zumindest zwei kombinierten Signalparametern ermittelt werden.

Bei Ausführungsbeispielen können beim Kombinieren der ermittelten Signalparameter alle ermittelten Signalparameter [z.B. die Menge von ermittelten Signalparametern] oder eine Gruppe von Signalparametern [z.B. eine (echte) Teilmenge von ermittelten Signalparametern] kombiniert werden, um einen kombinierten Signalparameter zu erhalten, wobei der zumindest eine Umweltparameter basierend auf dem einen kombinierten Signalparameter ermittelt wird.

Beispielsweise können ein Umweltparameter oder mehrere (unterschiedliche) Umweltparameter basierend auf dem einen kombinierten Signalparameter ermittelt werden.

Bei Ausführungsbeispielen kann das Verfahren einen Schritt des Kombinierens der ermittelten Signalparameter aufweisen, um eine anteilige Abbildung auf zumindest zwei Umweltparameter zu ermitteln.

Beispielsweise können zwei Umweltparameter den gleichen Signalparameter beeinflussen wodurch bei einem einzelnen Signalparameter keine eindeutige Abbildung auf einen Umweltparameter möglich ist.

Bei Ausführungsbeispielen können die Signalparameter basierend auf einer Mittelung, Gewichtung oder Filterung kombiniert werden.

Bei Ausführungsbeispielen können beim Ermitteln des zumindest einem Umweltparameters zumindest zwei Umweltparameter des Bereichs ermittelt werden, wobei das Verfahren ferner einen Schritt des Kombinierens der Umweltparameter aufweist, um zumindest einen kombinierten Umweltparameter des Bereichs zu erhalten.

Beispielsweise kann zumindest für eine Teilmenge der ermittelten Signalparameter jeweils ein Umweltparameter ermittelt werden [z.B. ein Umweltparameter pro ermittelten Signalparameter]. Natürlich ist es auch möglich, dass zuvor zumindest zwei Gruppen [z.B. echte Teilmengen [z.B. disjunkte oder sich überlappende Teilmengen]] von Signalparametern kombiniert werden, um für die zumindest zwei Gruppen von Signalparametern zumindest zwei kombinierte Signalparameter zu erhalten, wobei für zumindest zwei der kombinierten Signalparameter jeweils ein Umweltparameter ermittelt wird. Optional können auch mehr als ein Umweltparameter [z.B. Temperatur, Luftdruck,...] je Signalparameter oder je kombinierten Signalparameter ermittelt werden.

Bei Ausführungsbeispielen können beim Ermitteln des zumindest einen Umweltparameters zumindest zwei Umweltparameter des Bereichs ermittelt werden, wobei das Verfahren ferner einen Schritt des Ermittelns einer Verteilung von Umweltparametern in dem Gebiet basierend auf den zumindest zwei Umweltparametern oder kombinierten Umweltparametern aufweist.

Bei Ausführungsbeispielen können beim Ermitteln des zumindest einen kombinierten Umweltparameters zumindest zwei kombinierte Umweltparameter des Bereichs ermittelt werden, wobei das Verfahren ferner einen Schritt des Ermittelns einer Verteilung von Umweltparametern in dem Bereich basierend auf den zumindest zwei kombinierten Umweltparametern aufweist.

Bei Ausführungsbeispielen kann das Verfahren ferner einen Schritt des Ermittelns von zumindest einem Umgebungszustand [z.B. Erdbeben, Sturm, Regen, Stau] des Bereichs basierend auf der ermittelten Verteilung von Umweltparametern aufweisen.

Bei Ausführungsbeispielen kann das Verfahren ferner einen Schritt des Optimierens eines Übertragungsverfahrens eines Kommunikationssystems, das in dem Bereich angeordnet ist [z.B. eines Kommunikationssystems mit zumindest einem Teil der Datensender und dem Datenempfänger und zumindest einem weiteren Datenempfänger], basierend auf der ermittelten Verteilung von Umweltparametern aufweisen.

Bei Ausführungsbeispielen kann das Verfahren ferner einen Schritt des Optimierens eines Routings von Datenpaketen eines Kommunikationssystems, das in dem Bereich angeordnet ist [z.B. eines Kommunikationssystems mit zumindest einem Teil der Datensender und dem Datenempfänger und zumindest einem weiteren Datenempfänger], basierend auf der ermittelten Verteilung von Umweltparametern aufweisen.

Bei Ausführungsbeispielen können zumindest ein Teil der Mehrzahl von Datensendern Zähler und/oder Sensoren sein, wobei das Verfahren ferner einen Schritt des Optimierens einer Ausleseroute zum Auslesen der Zähler und/oder Sensoren basierend auf der ermittelten Verteilung von Umweltparametern aufweist.

Bei Ausführungsbeispielen kann das Verfahren ferner einen Schritt des Optimierens einer Antennenhauptstrahlrichtung des Datenempfängers [z.B. Basisstation] oder eines anderen Datenempfängers [z.B. eine andere Basisstation] basierend auf der ermittelten Verteilung von Umweltparametern aufweisen.

Bei Ausführungsbeispielen können die Mehrzahl von Datensendern zumindest zwei unterschiedlichen Funksystemen [z.B. WLAN, Bluetooth, ZigBee] angehöhren [z.B. Datensender unterschiedlicher Funksysteme sind].

Bei Ausführungsbeispielen können die Mehrzahl von Signalen von zumindest zwei Basisstationen empfangen werden.

Beispielsweise kann eine erste Gruppe [z.B. (echte) Teilmenge] von Signalen von einer ersten Basisstation empfangen werden, wobei eine zweite Gruppe [z.B. (echte) Teilmenge] von Signalen von einer zweiten Basisstation empfangen werden kann.

Bei Ausführungsbeispielen können zumindest zwei der Basisstationen unterschiedlichen Funksystemen [z.B. WLAN, Bluetooth, ZigBee] angehöhren [z.B. Basisstationen unterschiedlicher Funksysteme sind].

Bei Ausführungsbeispielen können die Signalparameter durch zumindest eine Basisstation ermittelt werden.

Bei Ausführungsbeispielen können die Umweltparameter durch zumindest eine Basisstation oder einem mit der zumindest einen Basistation verbundenen Server [z.B. Head End] ermittelt werden.

Bei Ausführungsbeispielen kann der zumindest eine Umweltparameter basierend auf zumindest einer Abbildungsfunktion ermittelt werden.

Bei Ausführungsbeispielen kann die zumindest eine Abbildungsfunktion basierend auf Informationen von zumindest zwei Datensendern [z.B. basierend auf Signalparametern von Signalen der zumindest zwei Datensender oder einem kombinierten Signalparametern, oder basierend auf zumindest einem Umweltparameter, der basierend auf den Signalparametern oder dem kombinierten Signalparameter ermittelt wurde] ermittelt oder kalibriert werden.

Bei Ausführungsbeispielen kann der zumindest eine Umweltparameter basierend auf einer kombinierten Abbildungsfunktion ermittelt werden, wobei die kombinierte Abbildungsfunktion durch Kombination von zumindest zwei Abbildungsfunktionen von zumindest zwei Datensendern ermittelt werden kann.

Bei Ausführungsbeispielen können die zumindest zwei Datensender im Wesentlichen gleiche Taktgeber aufweisen [z.B. aus der gleichen Herstellungsserie [Charge]].

Bei Ausführungsbeispielen können die Abbildungsfunktionen Temperaturkurven der Taktgeber der Datensender sein.

Bei Ausführungsbeispielen kann der zumindest eine Umweltparameter basierend auf unterschiedlichen Signalparametern [z.B. Trägerfrequenzen und Empfangszeitpunkten] ermittelt werden.

Bei Ausführungsbeispielen sind erfindungsgemäß die Signalparameter
- Empfangsträgerfrequenzen,
- Empfangszeitpunkte,
- Empfangssymbolraten,
- Empfangsmodulationsindizes,
- Dopplerfrequenzen,
- Signal- zu Rauschverhältnisse,
- Signalleistungen,
- Kanalphasen,
- Kanaldämpfungen,
- Kanaldispersionen und/oder
- Polarisationsdrehungen
oder eine Änderung derselben.

Bei Ausführungsbeispielen kann der zumindest eine Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben sein.

Bei Ausführungsbeispielen können die Mehrzahl von Datensendern einem Ablese- oder Messsystem angehören, wobei die Mehrzahl von Signalen abgelesene oder gemessenen Werte als [z.B. modulierte] Primärinformation aufweisen können, wobei das Verfahren einen Schritt des Anpassens der gemessenen oder abgelesenen Werte basierend auf dem zumindest einen Umweltparameter des Bereichs aufweisen kann.

Beispielsweise kann die Genauigkeit der gemessenen oder abgelesenen Werte basierend auf dem zumindest einen Umweltparameter verbessert werden. Beispielsweise können Messfehler der abgelesene oder gemessenen Werte basierend auf dem zumindest einen Umweltparameter korrigiert werden.

Weitere Ausführungsbeispiele schaffen eine Basisstation, wobei die Basisstation ausgebildet ist, um eine Mehrzahl von Signalen von einer Mehrzahl von Datensendern, die in einem Bereich angeordnet sind, zu empfangen, wobei die Mehrzahl von Signalen von Taktsignalen von Taktgebern der jeweiligen Datensender abhängig sind, wobei die Basisstation ausgebildet ist, um Signalparameter [z.B. Signaleigenschaften, wie z.B. Trägerfrequenzen oder Trägerfrequenzabweichungen] der Mehrzahl von empfangenen Signalen zu ermitteln, und wobei die Basistation ausgebildet ist, um zumindest einen Umweltparameter des Bereichs, dem die Taktgeber der Datensender ausgesetzt sind, basierend auf den ermittelten Signalparametern zu ermitteln.

Weitere Ausführungsbeispiele schaffen einen Server, wobei der Server ausgebildet ist, um Signalparameter einer Mehrzahl von Signalen einer Mehrzahl von Datensendern zu erhalten, wobei die Mehrzahl von Signalen von Taktsignalen von Taktgebern der jeweiligen Datensender abhängig sind, wobei die Mehrzahl von Datensendern in einem Bereich angeordnet sind, wobei der Server ausgebildet ist, um zumindest einen Umweltparameter des Bereichs, dem die Taktgeber der Datensender ausgesetzt sind, basierend auf den ermittelten Signalparametern zu ermitteln.

Ausführungsbeispiele der vorliegenden Erfindung werden bezugnehmend auf die beiliegenden Figuren näher beschrieben. Es zeigen:
- Fig. 1: in einem Diagramm eine Abweichung eines hochfrequenten Taktgebers von der Referenzfrequenz in Abhängigkeit von der Temperatur;
- Fig. 2: in einem Diagramm eine Abweichung eines niederfrequenten Taktgebers von der Referenzfrequenz in Abhängigkeit von der Temperatur;
- Fig. 3: zeigt eine schematische Ansicht eines Systems mit einem Datensender und einem Datenempfänger, gemäß einem Ausführungsbeispiel der vorliegenden Erfindung;
- Fig. 4: ein schematisches Blockschaltbild eines Systems mit einem Datenempfänger und einem Datensender, gemäß einem Ausführungsbeispiel der vorliegenden Erfindung;
- Fig. 5: in einem Diagramm Dichtefunktionen von vier unterschiedlichen Normalverteilungen;
- Fig. 6: in einem Diagramm eine schematische Ansicht der datenempfängerseitigen Bestimmung der Quarzkurve des Quarzes des Datensenders, gemäß einem Ausführungsbeispiel der vorliegenden Erfindung;
- Fig. 7: in einem Diagramm Abhängigkeiten von zwei unterschiedlichen Signalparametern von einem Umweltparameter;
- Fig. 8: ein schematisches Blockschaltbild eines Systems mit einem Datenempfänger und einer Mehrzahl von Datensendern, die in einem Bereich angeordnet sind, gemäß einem Ausführungsbeispiel der vorliegenden Erfindung;
- Fig. 9a: ein schematisches Blockschaltbild eines Systems mit einem Datenempfänger und einem Datensender, gemäß einem Ausführungsbeispiel der vorliegenden Erfindung;
- Fig. 9b: ein schematisches Blockschaltbild eines Systems mit einem Datenempfänger und einem Datensender, gemäß einem Ausführungsbeispiel der vorliegenden Erfindung;
- Fig. 10: in einem Diagramm einen erhaltenen Umweltparameter verglichen mit einem erwarteten Umweltparameter, gemäß einem Ausführungsbeispiel der vorliegenden Erfindung;
- Fig. 11: in einem Diagramm einen basierend auf dem zumindest einen erhaltenen Umweltparameter und mehreren zuvor erhaltenen Umweltparametern ermittelten Umweltparameterverlauf und einen erwarteten Umweltparameterverlauf, gemäß einem Ausführungsbeispiel der vorliegenden Erfindung;
- Fig. 12: ein schematisches Blockschaltbild des Systems 100 mit dem Datenempfänger 110 und dem Datensender 130, gemäß einem weiteren Ausführungsbeispiel der vorliegenden Erfindung;
- Fig. 13: ein Flussdiagramm eines Verfahrens zum Ermitteln eines Betriebszustandes eines Datensenders oder einer Komponente des Datensenders, gemäß einem Ausführungsbeispiel der vorliegenden Erfindung; und
- Fig. 14: ein Flussdiagramm eines Verfahrens zum Ermitteln eines Betriebszustandes eines Datensenders oder einer Komponente des Datensenders, gemäß einem weiteren Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

In typischen Funksystemen wird zur Erzeugung von Übertragungssignalen eine Referenzfrequenz benötigt, aus welcher der jeweilige Funkchip bzw. das jeweilige Frontend die notwendigen Takte ableitet. Diese Referenzfrequenz wird typischerweise durch einen Taktgeber, wie z.B. einen Schwingquarz (Quarz) [1], zur Verfügung gestellt. Datensender, wie z.B. Knoten bzw. Sensorknoten, umfassen in der Regel zwei unterschiedliche Taktgeber. Dies kann beispielsweise ein hochfrequenter (HF) Taktgeber, der mit einer Frequenz von mehrere MHz schwingt, und ein niederfrequenter Taktgeber (LF), der üblicherweise mit einer Frequenz von 32768 Hz schwingt, sein. Der hochfrequente Taktgeber ist in der Regel genauer (in Hinsicht auf die Abweichung von der Nominalfrequenz) und stromhungriger. Der niederfrequente ist ungenauer dafür aber sehr stromsparend.

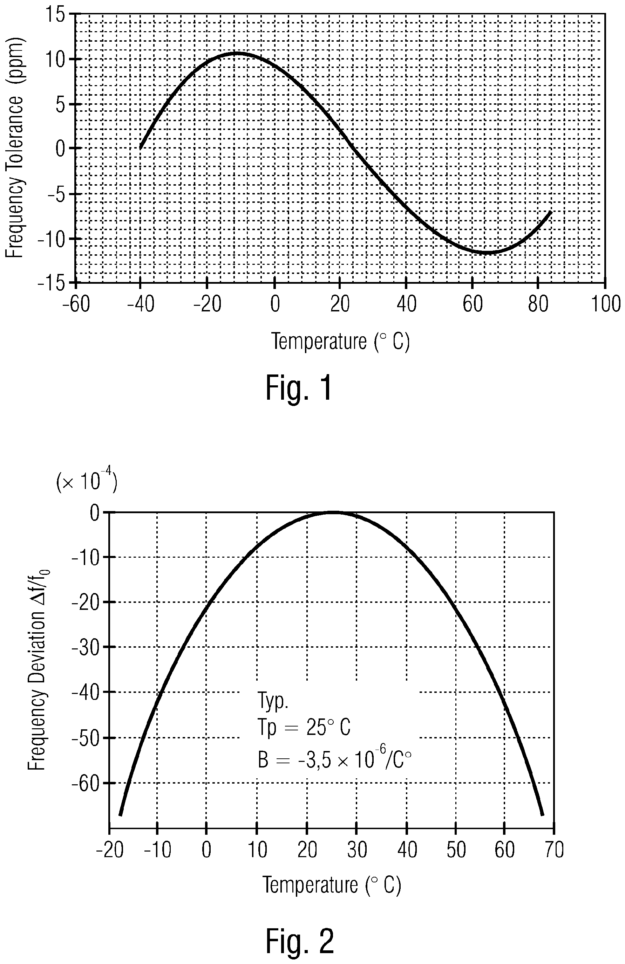

Die von den Taktgebern (Schwingquarzen) zur Verfügung gestellten Referenzfrequenzen sind jedoch typischerweise von Umweltparametern abhängig. In Fig. 1 ist beispielhaft die Abhängigkeit der Referenzfrequenz über der Temperatur für einen beliebigen hochfrequenten Taktgeber zu sehen (Frequenzstabilität eines hochfrequenten Schwingquarzes über der Umgebungstemperatur [2]), während in Fig. 2 beispielhaft die Abhängigkeit der Referenzfrequenz über der Temperatur für einen beliebigen niederfrequenten Taktgeber gezeigt ist (Frequenzstabilität eines niederfrequenten (LF) 32768 kHz Quarzes über der Temperatur [5]). Dabei beschreiben die Ordinaten jeweils die Frequenztoleranz in ppm und die Abszissen jeweils die Temperatur in °C.

Neben der Temperatur gibt es weitere Abhängigkeiten des Taktgebers (Quarzes) von zumindest folgenden Parametern:
- Luftfeuchtigkeit
- Druck
- EM-Strahlung
- Helligkeit
- Vibration/Bewegung

All diese Parameter haben einen Einfluss auf die vom Taktgeber (Schwingquarz) zur Verfügung gestellte Referenzfrequenz. Wird diese Referenzfrequenz für die Erzeugung der Übertragungssignale eingesetzt, wirken sich diese Abhängigkeiten direkt auf das Übertragungssignal und somit auf die Übertragungsparameter (Signaleigenschaften) aus. Folgende Übertragungsparameter sind dabei vor spezieller Bedeutung:
- Sendefrequenz
- Sendezeitpunkt
- Symbolrate
- Modulationsindex (bei Frequenzumtastungsverfahren, wie z.B. FSK oder GMSK)
- Doppler (nur bei Vibration/Bewegung)

Bei der Erzeugung und Abstrahlung eines Funksignals in einem Sender wirken sich somit Umgebungsbedingungen des Senders auf das abgestrahlte Funksignal aus. Insbesondere die Frequenz von Oszillatoren, die in dem Sender als Referenz für Träger- oder Modulationsfrequenzen dient, kann durch Umwelteinflüsse verändert werden. Beispielsweise korreliert bei nicht temperaturkorrigierten Oszillatoren (Quarzen) die Frequenz mit der Umgebungstemperatur. Analoge Effekte können auch für Luftfeuchtigkeit, Elektromagnetische Strahlung, Helligkeit oder Vibrationen auftreten. Darüber hinaus wirken sich Bewegungen oder Vibrationen des Senders und dessen Antenne durch Dopplerverschiebungen in dem abgestrahlten Signal aus.

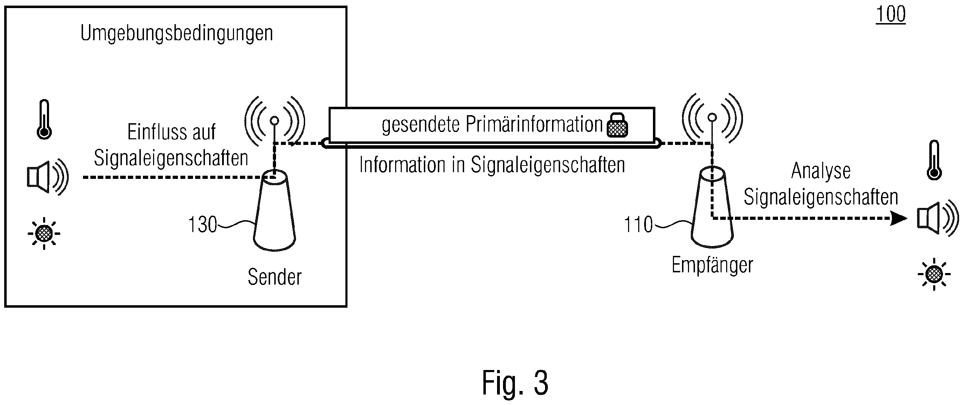

Durch diese Eigenschaften trägt das abgestrahlte Signal neben der Primärinformation weitere implizite Informationen über die Umgebungsbedingungen oder Eigenschaften des Senders. Zur Veranschaulichung ist dieses Phänomen grafisch in Fig. 3 gezeigt

Im Detail zeigt Fig. 3 eine schematische Ansicht eines Systems 100 mit einem Datensender 130 und einem Datenempfänger 110. Wie in Fig. 3 zu erkennen ist, wirken sich die Umgebungsbedingungen auf Seiten des Datensenders 130 auf das von dem Datensender 130 gesendete Signal 120 aus, so dass das Signal 120 neben einer Primärinformation zusätzlich eine Information über die Umgebungsbedingungen in den Signaleigenschaften aufweist. Mit anderen Worten, Fig. 3 zeigt eine Funkkommunikation zwischen Sender 130 und Empfänger 110, wobei neben der gesendeten Primärinformation auch die Information über die Signaleigenschaften gezeigt ist.

Ist es nun möglich am Empfänger 130 die Signaleigenschaften zu bestimmen (z.B. zu schätzen), kann über den Zusammenhang der Signaleigenschaften mit den Umgebungsbedingungen direkt auf die Umgebungsbedingungen am Sender 130, am Empfänger 110 oder dazwischen geschlossen werden. Da die größten Toleranzen allerdings am Sender 130 entstehen werden meistens Umgebungsbedingungen am Sender bestimmt. Die Temperatur kann beispielsweise aus einem ermittelten Frequenzoffset (Abweichung zur erwarteten Nominalfrequenz) über die in Fig. 1 gezeigte Kurve am Sender bestimmt werden.

### 1. Bestimmung von Umweltparametern durch Auswertung von Empfangsparametern

Im Folgenden werden Ausführungsbeispiele der vorliegenden Erfindung beschrieben, die sich auf die Bestimmung der Umgebungsbedingungen aus den Signaleigenschaften und deren Auswertung beziehen.

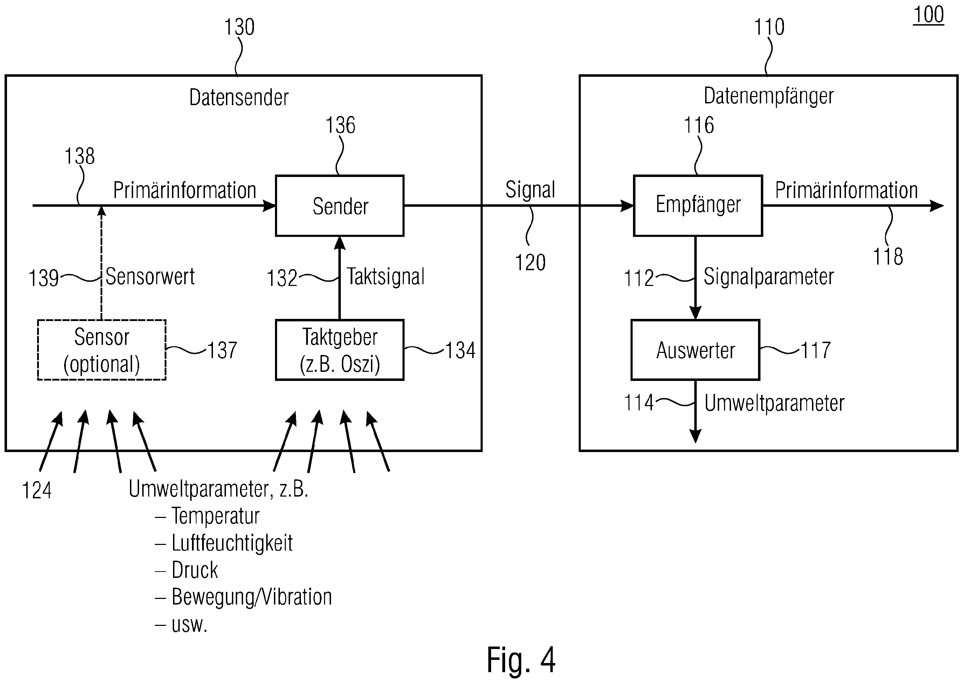

Fig. 4 zeigt ein schematisches Blockschaltbild eines Systems 100 mit einem Datenempfänger 110 und einem Datensender 130, gemäß einem Ausführungsbeispiel der vorliegenden Erfindung.

Der Datenempfänger 110 ist ausgebildet, um ein Signal 120 des Datensenders 130 zu empfangen, wobei das Signal 120 von einem Taktsignal 132 eines Taktgebers 134 (z.B. eines Frequenzgebers, wie z.B. eines Oszillators bzw. Quarzes) des Datensenders 130 abhängig ist. Der Datenempfänger 110 ist ferner ausgebildet, um einen Signalparameter 112 (z.B. eine Signaleigenschaft, wie z.B. eine Trägerfrequenz oder Trägerfrequenzabweichung) des Signals 120 zu ermitteln (z.B. auszuwerten), und um basierend auf dem Signalparameter 112 einen Umweltparameter 114 (z.B. eine Temperatur oder Temperaturänderung) zu ermitteln (z.B. zu schätzen), dem der Taktgeber 134 des Datensenders 130 und/oder dem das Signal 120 ausgesetzt ist.

Wie in Fig. 4 beispielhaft gezeigt ist, kann der Datensender 130 einen Sender 136 (Funkchip / Frontend) aufweisen, der ausgebildet ist, um das Signal 120 (Sendesignal) zu erzeugen, wobei das Signal 120 vom dem Taktsignal 132 des Taktgebers 134 abhängig ist. Beispielsweise kann der Sender 136 mit dem Taktsignal 132 des Taktgebers 134 getaktet sein, so dass das Signal 120 von dem Taktsignal 132 des Taktgebers 134 abhängig ist.

Ein Umweltparameter 124 (z.B. eine Temperatur oder Temperaturänderung), der auf den Taktgeber 134 des Datensenders 130 einwirkt, beeinflusst den Taktgeber 134 und damit zumindest einen Signalparameter (z.B. Frequenz) des von dem Taktgeber 134 bereitgestellten Taktsignals 132. Da das von dem Datensender 130 gesendete Signal 120 von dem Taktsignal 132 abhängig ist, beeinflusst der Umweltparameter 124 nicht nur einen Signalparameter (z.B. Frequenz) des Taktsignals 132, sondern auch einen Signalparameter (z.B. eine Signaleigenschaft, wie z.B. Trägerfrequenz) des von dem Datensender 130 gesendeten Signals 120.

Der Datenempfänger 110 kann somit durch Auswerten des Signalparameters 112 des empfangenen Signals 120 auf den Umweltparameter (z.B. Temperatur) in der Umgebung des Datensenders 130 schließen bzw. diesen schätzen.

Der Signalparameter 112 ist dabei unabhängig von einem Modulationsinhalt des Signals 120, wie z.B. von einer modulierten Primärinformation, die das Signal 120 aufweist.

Beispielweise kann der Datensender 130 (bzw. der Sender 136 des Datensenders 130) ausgebildet sein, um eine Primärinformation 138 (z.B. eine ID (=Identifikator) des Datensenders 130, eine Synchronisationssequenz/Pilotsequenz, Nutzdaten und/oder Dummy-Daten) zu modulieren, so dass das Signal 120 eine modulierte Primärinformation aufweist. Neben der modulierten Primärinformation enthält das Signal 120 jedoch zusätzlich eine Information über den Umweltparameter 124 (in der Umgebung des Datensenders 130) in dem Signalparameter 112, den der Datenempfänger 110 auswerten kann, um auf den Umweltparameter 114 zu schließen.

Wie in Fig. 4 beispielhaft gezeigt ist, kann der Datenempfänger 110 einen Empfänger 116 aufweisen, der ausgebildet ist, um das empfangenen Signal 120 zu demodulieren, um die in dem Signal 120 enthaltene Primärinformation 118 zu erhalten. Ferner kann der Datenempfänger 110 (z.B. der Empfänger 116 des Datenempfängers 110) ausgebildet sein, um den Signalparameter 112 des empfangenen Signals 120 zu ermitteln bzw. auszuwerten, um die in dem Signal 120 zusätzlich enthaltene Information über den Umweltparameter 124 zu erhalten. Beispielsweise kann der Datenempfänger 110 hierzu einen Auswerter 117 (z.B. einen Prozessor) aufweisen, der ausgebildet ist, um basierend auf dem Signalparameter 112 den Umweltparameter 114 zu ermitteln (z.B. zu schätzen), zum Beispiel basierend auf einer Abbildungsfunktion, die den Signalparameter 112 auf den Umweltparameter 114 abbildet.

Bei Ausführungsbeispielen kann der Datensender 130 (bzw. der Sender 136 des Datensenders 130) ausgebildet sein, um als Signal 120 ein digital moduliertes Signal 120 bereitzustellen. Der Datenempfänger 110 kann dabei ausgebildet sein, um einen analogen Signalparameter 112 (z.B. eine analoge Signaleigenschaft, wie z.B. eine Trägerfrequenz) des digital modulierten Signals 120 zu ermitteln, und basierend auf dem analogen Signalparameter 112 den Umweltparameter 114 zu ermitteln. Der analoge Signalparameter 112 ist dabei unabhängig von einem Modulationsinhalt des digital modulierten Signals 120, wie z.B. von einer digital modulierten Primärinformation, die das Signal 120 aufweist.

Bei Ausführungsbeispielen ist es somit möglich, basierend auf dem (analogen) Signalparameter 112 den Umweltparameter in der Umgebung des Datensenders 130 zu schätzen, ohne dass der Umweltparameter hierfür explizit in dem Modulationsinhalt des Signals 120, d.h. in der modulierten Primärinformation des Signals 120, übertragen werden muss.

Obwohl mit dem Signal 120 also primär ganz andere Nutzdaten oder auch nur eine ID des Datensenders und/oder eine Synchronisationssequenz/Pilotsequenz übertragen werden, ist es trotzdem möglich, basierend auf dem (analogen) Signalparameter 112 den Umweltparameter in der Umgebung des Datensenders 130 zu ermitteln.

Die Ermittlung des Umweltparameters in der Umgebung des Datensenders 130 basierend auf dem (analogen) Signalparameter des empfangen Signals 120 schafft ein breites Spektrum von Anwendungsmöglichkeiten.

So kann gem. Ausführungsbeispielen der Datensender 130, wie dies in Fig. 4 beispielhaft angedeutet ist, einen Sensor 137 für einen Umweltparameter 124 aufweisen. Da der Umweltparameter auf Seiten des Datenempfängers 110 auch basierend auf dem (analogen) Signalparameter 112 des Signals 120 ermittelt werden kann, ist es nicht mehr erforderlich den Sensorwert 139 regelmäßig bzw. mit jeder Aussendung des Signals 120 in der modulierten Primärinformation des Signals 120 zu übertragen. Vielmehr genügt es mit dem Signal 120 als modulierte Primärinformation eine Synchronisationssequenz/Pilotsequenz und/oder eine ID des Datensenders 130 oder aber auch nur Dummy-Daten zu übertragen. Hierdurch kann die mit dem Signal 120 übertragene Datenmenge reduziert werden, wodurch auch die zur Übertragung des Signals 120 erforderliche Energie reduziert werden kann, was insbesondere für batteriebetriebenen Datensender 130 von Vorteil ist. Auch muss der Sensor 137 nicht mehr für jede Aussendung des Signals 120 aktiviert werden, wodurch der Energieverbrauch weiter reduziert werden kann. Natürlich kann der von dem Sensor 137 bereitgestellte Sensorwert 139 zusätzlich in einer Aussendung oder einer geringen Anzahl (Teilmenge) von Aussendungen des Signals 120 in der modulierten Primärinformation mit übertragen werden und auf Seiten des Datenempfängers 110 beispielsweise zur Kalibrierung oder Initialisierung genutzt werden. Genauso ist es möglich auf Seiten des Datensenders 130 vollständig auf den Sensor 137 für den Umweltparameter zu verzichten und/oder den Umweltparameter auf Seiten des Datenempfängers 110 ausschließlich basierend auf dem ermittelten Signalparameter 112 des empfangen Signals 120 zu ermitteln.

Ferner ist es durch die Ermittlung des Umweltparameters auf Seiten des Datenempfängers 110 basierend auf dem (analogen) Signalparameter 112 des Signals 120 möglich, einen Datensender 130, der einen Sensor 137 für einen ersten Umweltparameter aufweist, ebenfalls als Sensor für einen zweiten Umweltparameter zu verwenden. Beispielsweise kann gem. Ausführungsbeispielen der Datensender 130 einen Sensor 137 für einen ersten Umweltparameter 124 (z.B. Luftfeuchtigkeit oder Druck) aufweisen, wobei der Datenempfänger 110 ausgebildet ist, um basierend auf dem ermittelten Signalparameter 112 des Signals 120 einen zweiten Umweltparameter (z.B. Temperatur) zu ermitteln, wobei der erste Umweltparameter und der zweite Umweltparameter unterschiedlich sind.

Des Weiteren ist es durch die Ermittlung des Umweltparameters auf Seiten des Datenempfängers 110 basierend auf dem (analogen) Signalparameter 112 des empfangenen Signals 120 möglich, einen Datensender 130 als Sensor für einen Umweltparameter zu verwenden, der keinen Sensor für den Umweltparameter aufweist.

Darüber hinaus ist es möglich einen vorhandenen Datensender 130 als Sensor für einen Umweltparameter (z.B. als Temperatursensor) zu verwenden, obwohl der Datensender 130 an sich nicht als Sensor für den Umweltparameter vorgehsehen ist, beispielsweise da der Datensender 130 über keinen Sensor für den Umweltparameter verfügt oder aber auch weil der Datensender 130 den Sensorwert nicht übertragen kann.

Der Datensender 130 und der Datenempfänger 110 können optional ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket in eine Mehrzahl von Sub-Datenpakete (oder Teildatenpakete, oder Teilpakete) aufgeteilt und die Sub-Datenpakete entsprechend eines Sprungmusters in der Zeit verteilt und/oder in der Frequenz verteilt von dem Datensender 130 zu dem Datenempfänger 110 übertragen, wobei der Datenempfänger 110 die Sub-Datenpakete wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete sondern nur ein Teil der Sub-Datenpakete erforderlich ist. Die zeitliche Verteilung der Mehrzahl von Sub-Datenpaketen kann entsprechend eines Zeit- und/oder Frequenzsprungmusters erfolgen.

Im Folgenden werden detaillierte Ausführungsbeispiele der vorliegenden Erfindung beschrieben.

### 1.1. Bestimmung der Empfangsparameter und Abbildung auf Umweltparameter (Temperatur)

Manche Empfänger verfügen bereits über Schätzverfahren die sehr genau die Empfangsparameter (Signalparameter des empfangen Signals 120) schätzen können. Andere Empfänger können mit solchen Schätzverfahren nachgerüstet werden. Typische Empfangsparameter die geschätzt werden können sind
- Empfangsträgerfrequenz,
- Empfangszeitpunkte,
- Empfangs Symbolrate,
- Empfangs Modulationsindex (bei Frequenzumtastungsverfahren z. B bei FSK oder GMSK),
- Doppler Frequenz (nur bei Vibration/Bewegung),
- Signal Rauschverhältnis,
- Signalleistung (RSSI),
- Kanalphase, Kanaldämpfung,
- Dispersion in dem Kanal (Anzahl der Mehrpfade), und
- Polarisationsdrehung.

Die Abweichungen der geschätzten Empfangsparameter zu den erwarteten Empfangsparametern geben Schlüsse auf die Umweltparameter.

Die Umweltparameter können dabei Umweltparameter in der Nähe des Datensenders 130 (z.B. Sendeknotens) sein, wie z.B. eine Temperatur des Datensenders oder eine Umgebungstemperatur (z.B. Raumtemperatur) der Umgebung des Datensenders, oder Umweltparameter des Kanals (z.B. Kommunikationskanals zwischen Datensender 130 und Datenempfänger 110) oder auch Umweltparameter des Datenempfänger 110 (Empfängers).

Im Allgemeinen hängen die Empfangsparameter von Toleranzen der Sendehardware, Störungen, die in dem Kanal verursacht werden, und/oder Toleranzen der Empfangshardware ab.

Bei Ausführungsbeispielen kann zumindest einer der Umweltparameter in der Umgebung des Datensenders 130 basierend auf einen Signalparameter des empfangen Signals 120 ermittelt werden. Ausführungsbeispiele können dabei sowohl für eine drahtlose Übertragung (z.B. über einen Funkkanal) als auch für eine kabelgebundene Übertragungen genutzt werden.

Im Folgenden wird beispielhaft die Schätzung der Empfangsträgerfrequenz als Signalparameter und die Abbildung der geschätzten Empfangsträgerfrequenz auf die Temperatur im Datensender 130 (z.B. Sendekonten) als Umweltparameter erläutert. Die Schätzung wird im Beispiel in einer Basisstation als Datenempfänger 110 durchgeführt. Der Datensender 130 (z.B. Endpunkt) sendet beispielsweise ein Datenpaket über einen drahtlosen Kommunikationskanal (z.B. Luft). Die Trägerfrequenz des Datenpakets wird durch den HF Quarz des Datensenders 130 bestimmt (siehe Fig. 1). Eine Temperatur von beispielsweise -12 Grad verzieht die Quarzfrequenz um + 10 ppm. Zusätzlich zu der Temperatur hängt die Trägerfrequenz auch von der Alterung und von der Exemplarstreuung ab. Die Exemplarstreuung ist eine einmalig feste Abweichung, die in der Produktion des Quarzes und der Herstellung der Leiterplatte entsteht. Die Exemplarstreuung kann während der Produktion abgeglichen und eliminiert werden. Die Alterung ist ein sehr langsamer Prozess, bei der sich die Frequenz über Jahre ändert. Die altersbedingte Abweichung des Quarzes kann nach der Kalibrierung mit 0 ppm angenommen werden. Zunächst kann ein Mittelwert über einen vorgegebenen Zeitraum, wie z.B. einem Jahr, als Referenz gebildet werden, um einen Referenzmittelwert zu erhalten. Anschließend kann ein Mittelwert (z.B. gleitender Mittelwert) über einen weiteren vorgegebenen Zeitraum, wie z.B. einem Jahr, gebildet werden, um die Alterung abzuschätzen. Die Differenz zwischen dem Referenzmittelwert und dem Mittelwert ergibt die Änderung durch die Alterung, d.h. die Abweichung zwischen Anfangsmittelwert (Referenzmittelwert) und aktuellen Mittelwert kann als Alterungsabweichung angenommen werden. Die aktuelle Alterung per Datensender 130 (z.B. Knoten) kann in der Basisstation 110 gespeichert werden. Der verbleibende Effekt ist dann nur die aktuelle Temperaturänderungen, welche durch die Temperaturkurve des Quarzes (siehe Fig. 1) beschrieben werden kann. Die Quarzfrequenz, welche beispielsweise im Idealfall 20 MHz beträgt, verschiebt sich dann zu 20,0002 MHz. Die Sendeträgerfrequenz des Datensenders 130 (z.B. Endknotens) verschiebt sich somit von 868 MHz auf 868,008680 MHz. Der Empfänger 116 in der Basisstation 110 empfängt das Datenpaket und schätzt die Trägerfrequenz. Die Schätzung ist sehr genau und gibt eine Abweichung von 8,68 kHz an. Hierbei wird angenommen, dass die Basisstation 110 sehr genaue Taktgeber besitzt. Beispielsweise kann die Basisstation 110 GPS synchronisiert sein oder einen sehr genauen temperaturkompensierten Quarz aufweisen, wie z.B. einen TCXO (temperature compensated crystal oscillator, dt. temperaturkompensierter Kristalloszillator) oder OCXO (oven controlled crystal oscillator, dt. ofenkontrollierter Kristalloszillator) der praktisch keine zusätzlichen Fehler zufügt. Gemäß Fig. 1 ist eine Abweichung von 8,68 kHz nur bei einer Temperatur von -12°C möglich, womit die Temperatur eindeutig bestimmt werden kann.

Etwas komplizierter ist der Fall, wenn die Frequenzschätzung beispielsweise einen Wert von +5 ppm ergibt. In diesem Fall existieren gemäß Fig. 1 zwei mögliche Lösungen, und zwar -32° und +12 °C. Hier reicht eine einzelne Temperaturmessung nicht aus. Beispielsweise kann eine zweite Messung durchgeführt werden. Wenn die zweite Messung beispielsweise eine Temperatur von +24°C ergibt und eine Differenz zu der vorherigen Schätzung der Empfangsträgerfrequenz +7 ppm beträgt, dann ist die Wahrscheinlichkeit höher, dass die Temperatur +12°C beträgt.

Bei Ausführungsbeispielen kann mindestens ein Empfangsparameter der Übertragung geschätzt werden und durch eine Abbildungsfunktion auf mindestens einem Umweltparameter oder eine Änderung des Umweltparameters abgebildet werden.

Bei Ausführungsbeispielen kann die Temperatur über eine Trägerfrequenzschätzung geschätzt werden.

Bei Ausführungsbeispielen kann die Messung z.B. einmalig mit Hilfe eines Temperatursensors kalibriert werden, um den aktuellen Temperaturpunkt zu ermitteln. Die Kalibrierung des Temperatursensors bringt einen weiteren Vorteil. Unterschiedliche Quarze weisen unterschiedliche Temperaturkurven auf. Beispielsweise kann in Abhängigkeit von einem Schnitt des Quarzes die Temperaturkurve etwas steiler oder flacher ausfallen. Basierend auf zumindest zwei mit dem Temperatursensor kalibrierten Temperaturpunkten kann die genaue Kurve ermittelt werden. Während der Kalibrierung kann die Alterung auch berechnet werden. In dem Fall zieht man den Mittelwert bei der Temperatur durch den Temperatur Sensor gemessen jetzt von dem Mittelwert gemessen letzten Jahres bei der gleichen Temperatur des Temperatursensors ab.

Bei Ausführungsbeispielen kann mittels eines existierenden Temperatursensors 137 eine initiale oder immer wiederkehrende Kalibrierung durchgeführt werden, die für die Verfeinerung der Abbildungsfunktion benutzt werden kann.

Bei Ausführungsbeispielen kann zunächst die Trägerfrequenz und daraus die Abweichung der Quarzfrequenz geschätzt werden.

Bei Ausführungsbeispielen können Empfangsparameter wiederum in andere Empfangsparameter abgebildet werden bevor diese in Umweltparameter abgebildet werden.

Analog zur Schätzung des Frequenzfehlers des Frequenzgebers basierend auf der Empfangsträgerfrequenz kann auch der Frequenzfehler des Zeitgebers geschätzt werden. Dafür kann der erwartete zeitliche Abstand mit dem geschätzten Zeitabstand zwischen zwei Datenpaketen bzw. Sub-Datenpaketen verglichen werden. Für die zeitliche Abweichung ist nicht nur der aktuelle Wert der Temperatur relevant, sondern die akkumulierte Temperaturänderung. Damit gibt die zeitliche Abweichung an, um wieviel sich die Temperatur im Mittel von der letzten Messung geändert hat (siehe Fig. 2). Der Frequenzfehler des Zeitgebers kann für eine eigenständige Schätzung der Umwelteinflüsse benutzt werden oder in Kombination mit der Abweichung der HF Quarzes.

Bei Ausführungsbeispielen können die Empfangsparameter (Empfangs-)Zeitpunkte der Datenpakete/Sub-Datenpakete, eine Trägerfrequenz, ein Symboltakt, ein Modulationsfehler, eine Empfangsleistung, oder ein empfangenes Signal-Rausch-Verhältnis sein.

Bei Ausführungsbeispielen kann zumindest eine Quarzkurve (z.B. wie in Fig. 1) in dem Datenempfänger 110 (z.B. Basisstation) hinterlegt werden.

Bei Ausführungsbeispielen können die Temperaturwerte eines Temperatursensors in den Nutzdaten (engl. payload) mitgesendet werden.

### 1.2. Bestimmung der Empfangsparameter und Abbildung auf Umweltparameter (andere)

Im Falle eines beweglichen Datensenders 130 (mobiler Betrieb) ändert sich die Trägerfrequenz des Signals 120 durch die Dopplerverschiebung. Die Verschiebung der Trägerfrequenz des Signals 120 hängt dabei von der Geschwindigkeit ab, mit der sich der Datensender 130 bewegt. Basierend auf der Schätzung der Verschiebung der Trägerfrequenz kann somit die Geschwindigkeit des Datensenders 130 relativ zu dem Datenempfänger 110 (z.B. Basisstation) geschätzt werden. Soweit die Geschwindigkeit des Datensenders 130 bezogen auf mehrere geographische Punkte (z.B. von mehreren Datenempfängern 110 (z.B. Basisstationen)) geschätzt wird, kann auch die Richtung und Geschwindigkeit des Datensenders 130 genauer geschätzt werden.

Bei Ausführungsbeispielen kann basierend auf einer Änderung (Verschiebung) der Trägerfrequenz des Signals 120 eine Bewegung erkannt werden.

Bei Ausführungsbeispielen kann basierend auf einem Frequenzprofil auf eine Vibration oder andere Bewegungen geschlossen werden (Schätzung der Doppler Verschiebung). Das Frequenzprofil bezieht sich dabei auf ein Profil der Dopplerverschiebung im Signal. Bei einer Vibration ändert sich die relative Geschwindigkeit des Senders zum Empfänger ständig, dadurch ergibt sich eine schnelle Änderung der geschätzten Dopplerfrequenz. Vibriert z.B. der Sender mit 100Hz, so ist 100 Mal pro Sekunde ein Anstieg und Abfall der Dopplerverschiebung im Signal die Folge.

Bei Ausführungsbeispielen ändert sich durch die Vibration des Quarzes die vom Quarz bereitgestellte Frequenz bzw. Referenzfrequenz (Mikrofonie des Quarzes). Hierdurch kann ebenfalls eine Vibration erkannt werden. Im Gegensatz zu dem Ausführungsbeispiel zuvor ergibt sich hier eine Frequenzabweichung im Signal, die konstant ist bei konstanter Vibrationsfrequenz. Diese entsteht durch eine Verstimmung des Quarzes, wenn dieser Vibrationen ausgesetzt wird.

### 1.3. Durch die Differenz von zwei Empfangsparameter auf die Umwelt schließen

Anstatt die Differenz zwischen dem geschätzten Empfangsparameter (z.B. Empfangsträgerfrequenz) und dem erwarteten Empfangsparameter (z.B. Empfangsträgerfrequenz) zu bestimmen, kann bei Ausführungsbeispielen auch die Differenz zwischen einem zu einem ersten Zeitpunkt (z.B. während einer ersten Aussendung des Signals 120) geschätzten Empfangsparameter (z.B. Empfangsträgerfrequenz) und einem zu einem zweiten Zeitpunkt (z.B. während einer zweiten Aussendung des Signals 120) geschätzten Empfangsparameter (z.B. Empfangsträgerfrequenz) ermittelt werden. Basierend auf der Differenz der Empfangsparameter kann eine Differenz des Umweltparameters ermittelt werden, wie z.B. eine Temperaturerhöhung (z.B. von +3°C).

Bei Ausführungsbeispielen kann ein Empfangsparameters basierend auf der Differenz von zumindest zwei anderen Empfangsparametern ermittelt werden. Der so ermittelte Empfangsparameter kann anschließend in den Umweltparameter (Umgebungsbedingungen) umgerechnet werden.

Bei Ausführungsbeispielen kann der Empfangsparameter die Differenz zwischen zwei geschätzten Empfangsfrequenzen sein.

### 1.4. Schätzung von Empfangsparametern

Im Folgenden werden Ausführungsbeispiele der Schätzung von Signalparametern (Empfangsparametern) beschrieben.

Bei Ausführungsbeispielen können zur Schätzung des Empfangsparameters die gesendeten Symbole der Übertragung (des Signals 120) eingesetzt werden. Bei Ausführungsbeispielen kann die Schätzung des Empfangsparameters basierend auf bekannten Symbolen erfolgen, die in der Übertragung eingesetzt werden, z.B. Pilotsymbole.

Bei Ausführungsbeispielen kann die Schätzung des Empfangsparameters basierend auf zwei Gruppen von Symbolen eines Datenpakets/Teildatenpakets erfolgen, wobei die zwei Gruppen von Symbolen voneinander beabstandet sind. Beispielsweise kann eine erste Gruppe von Symbolen am Anfang des Datenpakets/Teildatenpakets angeordnet sein, während eine zweite Gruppe von Symbolen am Ende des Datenpakets/Teildatenpakets angeordnet sein kann.

Bei Ausführungsbeispielen kann die Schätzung des Empfangsparameters auf mindestens vier Symbolen, vorzugsweise mindestens 20 Symbolen und besonders vorzugsweise mindestens 40 Symbolen basieren.

Bei Ausführungsbeispielen kann die Schätzung des Empfangsparameters basierend auf unbekannten Symbolen (des Datenpakets/Teildatenpakets) erfolgen (sog. blinde Schätzung).

Bei Ausführungsbeispielen können die Symbole, basierend auf denen die Schätzung des Empfangsparameter erfolgt, unmittelbar benachbarte Symbole oder voneinander beabstandeten Symbole sein.

Bei Ausführungsbeispielen können die Symbole ein Subdatenpaket (Teildatenpaket, radio burst) oder ein Datenpaket bilden.

Bei Ausführungsbeispielen können die Symbole, basierend auf denen die Schätzung des Empfangsparameter erfolgt, einem dem Datenempfänger 110 bekannten Muster entsprechen, wie z.B. einer Synchronisationssequenz.

Bei Ausführungsbeispielen können die Symbole, basierend auf denen die Schätzung des Empfangsparameter erfolgt, über mehrere Teildatenpakete/Datenpakete verteilt sein.

### 1.5. Verbesserung der Schätzgenauigkeit durch mehr Daten (Kalibrierung der Abbildunaskurve)

Wie bereits erwähnt hat jeder Quarz eine andere Temperaturkurve. Die Temperaturkurve des Quarzes kann aus einer möglichen Menge von möglichen Kurven genauer bestimmt werden. Dafür können stochastische Momente, wie z.B. Mittelwert / Varianz, gebildet werden. Auch die Bestimmung einer Verteilung ist möglich. Ferner kann ein Mittelwert gebildet werden, um die Exemplarstreuung rauszurechnen oder um die mittlere Temperatur zu bestimmen.

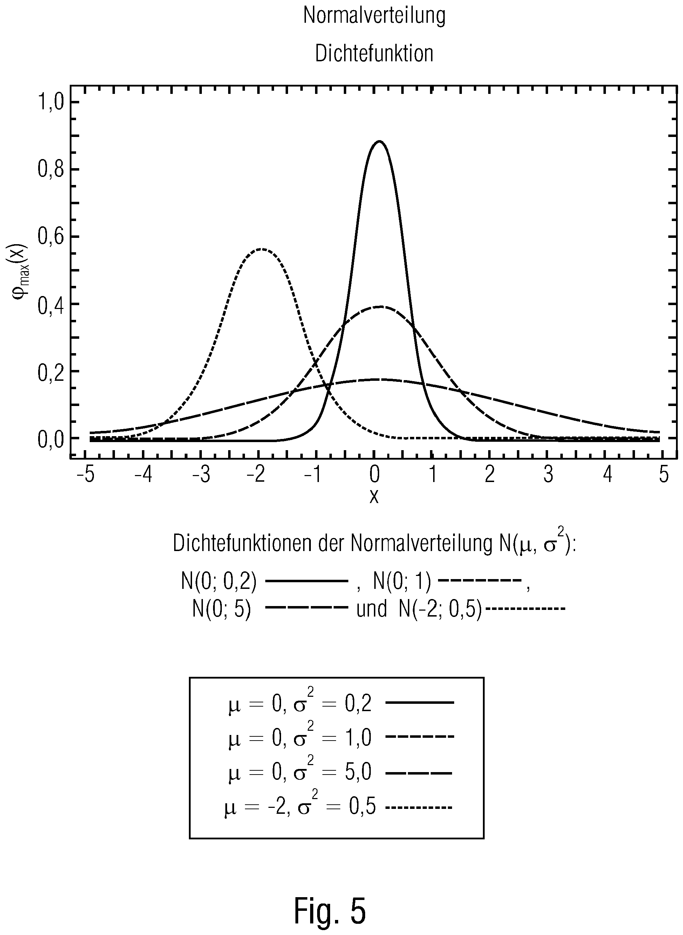

Fig. 5 zeigt in einem Diagramm Dichtefunktionen von vier unterschiedlichen Normalverteilungen. Dabei beschreibt die Ordinate die Wahrscheinlichkeitsdichte und die Abszisse den Wert einer Zufallsvariable.

Bei Ausführungsbeispielen kann über mehrere Temperaturwerte aus dem Sensor gemittelt werden, um den Mittelwert und/oder die Streuung der Temperatur zu bestimmen (siehe Fig. 5). Der Mittelwert und die Streuung können benutzt werden, um die genaue Temperaturkurve des Quarzes aus einer Menge (einem Satz) von möglichen Temperaturkurven zu bestimmen (Quarzfehler über Temperatur). Danach wird der Sensor nicht mehr benutzt, sondern nur der Quarz.

Wenn die Temperatur durch einen Temperatursensor bestimmt wurde, kann die Quarzkurve (Temperaturkurve des Quarzes) genauer bestimmt werden. Hierfür können mehrere Punkte aus der Kurve, mindestens zwei, kalibriert werden. Beispielsweise kann für eine gewisse Temperatur die genaue Frequenzabweichung (also diskrete Punkte auf der Quarzkurve) bestimmt werden. Dann kann mittels einer Polynomapproximationen, die durch die Punkte geht, die vollständige Kurve bestimmt werden (Befehl polyfit in MATLAB). Die Polynome überschreiten nicht bestimmte Grenzen, die durch den Quarzhersteller garantiert sind.

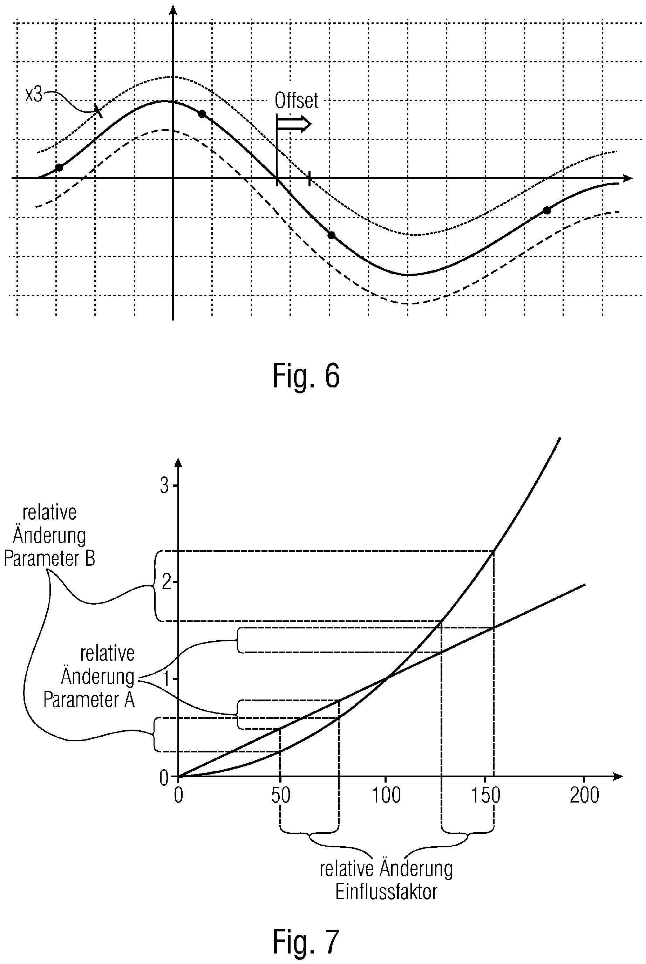

Fig. 6 zeigt in einem Diagramm eine schematische Ansicht der datenempfängerseitigen Bestimmung der Quarzkurve des Quarzes des Datensenders, gemäß einem Ausführungsbeispiel der vorliegenden Erfindung. Dabei beschreibt die Ordinate die Frequenzabweichung in ppm und die Abszisse die Temperatur in °C.

Es gibt zwei Möglichkeiten die Quarzkurve zu bestimmen.

Gemäß einer ersten Möglichkeit kann gleichzeitig eine Frequenz geschätzt und zusätzlich die Temperatur dazu aus der Payload ausgelesen werden. Die Temperatur wurde hierzu z.B. mittels eines Sensors erfasst. Dadurch sind die Werte der Abszisse und der Ordinate eines Punktes bekannt.

Wenn die gleiche Vorgehensweise für unterschiedliche Temperaturen (z.B. Tag / Nacht) wiederholt wird, können mehrere Punkte der Quarzkurve bestimmt werden. Die Quarzkurve kann durch die Funktion ax^3+bx^2+cx+d beschrieben werden. Durch Polynomapproximation (z.B. Befehl polyfit in Matlab) können die passenden Koeffizienten bestimmt werden und die komplette Kurve ermittelt werden.

In Fig. 6 ist die gestrichelte Kurve die bestimmte Quarzkurve. In der Produktion wurde bei der Kalibrierung 1 Punkt festgemacht, nämlich z.B. x = 20°C y = 0 ppm. Die Differenz zwischen der gestrichelten Kurve (von polyfit) und der Nullpunkt aus der Produktionskalibrierung ergibt den Offset auf Fig 6. Der Offset kann sich z.B. durch Alterung mit der Zeit verschoben haben.

Gemäß einer zweiten Möglichkeit wird nur die Frequenz geschätzt und die Temperatur dazu ist nicht bekannt. Damit ist nur die Ordinate jedes Punktes bekannt und nicht die Abszisse. Wenn mehrere Punkte der Kurve ermittelt wurden, kann basierend auf diesen entweder eine gequetschte oder eine gespreizte Quarzkurve ermittelt werden. Da der mögliche Verlauf der Kurve bekannt ist (z.B. Sinus ähnlich mit bekannter Frequenz) kann die Quetschung/Spreizung rausgerechnet und die Quarzkurve grob bestimmt werden.

Eine Mittelung der Frequenz kann in beiden Möglichkeiten benutzt werden um den Punkt der Quarzkurve genauer/unverrauschter zu bestimmen.

Bei Ausführungsbeispielen kann durch Messung von unterschiedlichen Temperaturen (z.B. Tagsüber, Nachtsüber, im Winter, im Sommer) die Quarzkurve genauer bestimmt werden (siehe Fig. 6).

Bei Ausführungsbeispielen kann der Fehler des Zeitgebers (LF 32 kHz) über die Frequenz des Trägerfrequenzgebers abgeglichen werden. Daraus ergibt sich ein Wert von X ppm. Hierbei ist der Trägerfrequenzgeber meistens präziser ist als der Zeitgeber. Die Abweichung der zwei Frequenzen kann im Signal 120 (z.B. Uplink) mitgeschickt werden und für eine Verfeinerung der Umweltparametermessung benutzt werden.

Bei Ausführungsbeispielen kann das Signal 120 (in der modulierten Primärinformation) eine Information aufweisen, die beschreibt, um wieviel der Zeitgeber (Zeitquarz, LF Quarz) und der Frequenzgeber (Frequenzquarz, HF Quarz) auseinanderlaufen. Diese Information kann im Datenempfänger (z.B. Basisstation) zur Kalibrierung der Quarzkurven oder für die Bestimmung der Umweltparameter eingesetzt werden.

Bei Ausführungsbeispielen können die entsprechenden Sendeparameter durch mindestens zwei unterschiedliche Taktgeber (z.B. Quarze) generiert werden, zum Beispiel kann durch einen ersten Quarz die Trägerfrequenz eines ersten Signals (z.B. eines ersten Datenpakets) generiert werden und durch einen zweiten Quarz die Trägerfrequenz eines zweiten Signal (z.B. eines zweiten Datenpakets). Die Ergebnisse der zwei Quarze können dann (auf Seiten des Datenempfängers) kombiniert (z.B. gemittelt) werden. Im Detail können Datensenderseitig zwei (z.B. quarzstabilisierte) Oszillatoren verwendet werden. Der Basistation kann bekannt sein, dass der Datensender zwei Oszillatoren aufweist und wann welcher Oszillator verwendet wird. Beispielsweise kann der Datensender abwechselnd Signale, die vom ersten Oszillator und vom zweiten Oszillator abhängig sind, senden. Bedingt dadurch, dass für die zwei Oszillatoren auch zwei Quarzkurven hinterlegt sind, können Datenempfängerseitig basierend auf den empfangenen Signalen und den zwei Quarzkurven auch zwei Temperaturen ermittelt werden, wobei die zwei Temperaturen kombiniert werden können (z.B. durch Mittelwertbildung), um die endgültige Temperatur zu erhalten. Natürlich können auch mehr als zwei Oszillatoren verwendet werden.

Falls zwei (oder mehr) Signalparameter geschätzt werden, die unterschiedlich beeinflusst werden, kann aus den relativen Änderungen der Abweichungen eine Rekonstruktion der absoluten Werte der beeinflussenden Faktoren erfolgen. Besteht z.B. eine lineare Abhängigkeit von der Temperatur bei Parameter A, und eine quadratisch Abhängigkeit von der Temperatur bei Parameter B, kann durch Vergleich der relativen Abweichungen auf die absolute Position auf der Quarzkurve geschlossen werden (vgl. Fig. 7).

Im Detail zeigt Fig. 7 in einem Diagramm Abhängigkeiten von zwei unterschiedlichen Signalparametern von einem Umweltparameter. Dabei beschreibt die Ordinate den Wert der Signalparameter (z.B. Frequenzabweichung und Zeitabweichung), während die Abszisse den Wert eines Umweltparameters (z.B. Temperatur) beschreibt. Mit anderen Worten, Fig. 7 zeigt Relativabweichungen bei unterschiedlich beeinflussten Parametern. Dabei sind relativen Abweichungen die eingezeichneten Differenzen zwischen den beobachteten Punkten, wobei die Achsen den beeinflussenden Umweltparameter (Abszisse) und beeinflusste Signalparameter (Ordinate) direkt darstellen.

Bei Ausführungsbeispielen erfolgt eine Kombination von Schätzwerten von unterschiedlich beeinflussbaren Sendern zur Ermittlung von Absolutwerten aus Relativabweichungen. Wenn mehrere Sender in gleicher oder ähnlicher Umgebung (z.B. im gleichen Raum) vorhanden sind und diese Sender (oder deren Quarze) unterschiedlich von Temperaturänderungen beeinflusst werden, kann durch einen Vergleich der ermittelten Signalparameter ein Empfänger, der mehrere dieser Sender empfängt, auf Absolutwerte schließen (analog zu Fig. 7) oder generell die Schätzgenauigkeit erhöhen.

### 2. Bestimmung von Umweltparametern eines Bereichs durch Kombination von Empfangsparametern

In Abschnitt 1 wurde gezeigt, dass sich aus Signalparametern (z.B. Empfangsparametern) eines Signals 120 eines Datensenders 130 die Umweltparameter 124 der Umgebung des Datensenders 130 schätzen lassen.

Häufig sind in einem gewissen Gebiet, unter Umständen mit gleichen Umgebungsbedingungen, mehrere Datensender angeordnet (z.B. verbaut). Dies ist beispielsweise bei WLAN-Netzwerken mit mehreren Teilnehmern oder im sog. IoT (Internet of Things, deutsch: Internet der Dinge) der Fall. Typischerweise sind die Positionen der Datensender bekannt oder können bestimmt werden.

Aus den Ergebnissen der einzelnen Datensender kann auf Verteilungen der Umgebungsbedingungen in dem Gebiet geschlossen werden.

Wie bereits erwähnt wurde, können u.a. die folgenden Signalparameter (Empfangsparameter) geschätzt und für eine Auswertung der Umgebungsbedingungen eingesetzt werden:
- Empfangsträgerfrequenz;
- Empfangszeitpunkte;
- Empfangssymbolrate;
- Empfangsmodulationsindex (bei Frequenzumtastungsverfahren, wie z.B. FSK oder GMSK); und/oder
- Doppler-Frequenz (nur bei Vibration/Bewegung).

Aus den oben genannten Signalparametern können Informationen über beispielsweise folgende Umweltparameter ermittelt werden:
- Temperatur;
- Luftfeuchtigkeit;
- Druck;
- elektromagnetische Strahlung;
- Helligkeit; und/oder
- Vibration/Bewegung.

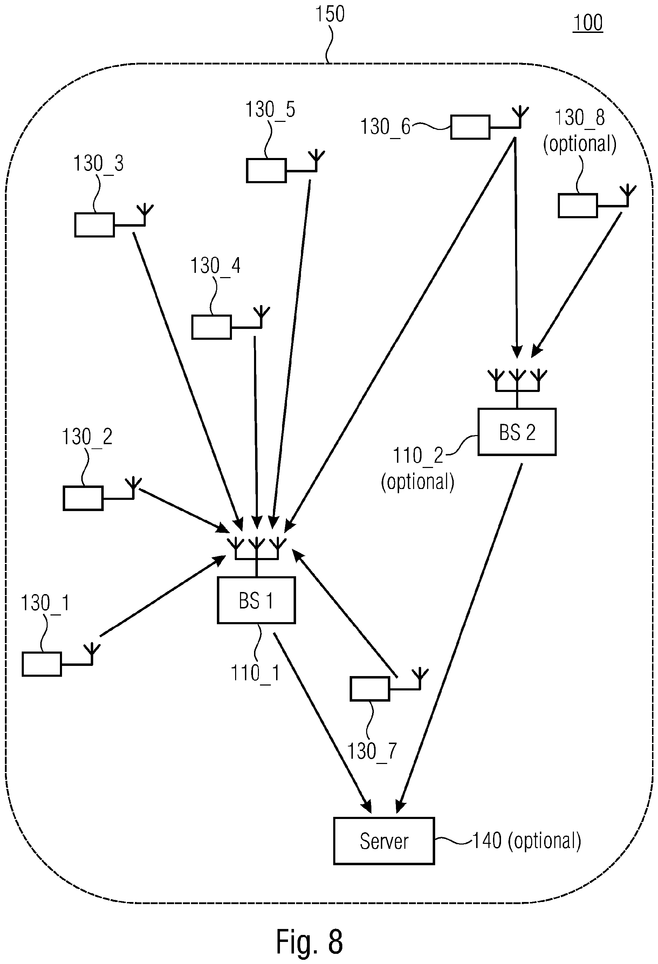

Fig. 8 zeigt ein schematisches Blockschaltbild eines Systems 100 mit einem Datenempfänger 110_1 und einer Mehrzahl von Datensendern 130_1-130_n (n=7), die in einem Bereich 150 angeordnet sind, gemäß einem Ausführungsbeispiel der vorliegenden Erfindung.

Das in Fig. 8 gezeigte System 100 weist beispielhaft n=7 Datensender 130_1-130_n auf, die in dem Bereich (z.B. einem Gebiet oder Gebäude) 150 angeordnet sind. Im Allgemeinen, kann das System 100 eine Mehrzahl von Datensendern 130_1-130_n aufweisen, wobei n eine natürliche Zahl größer gleich zwei ist n ≥ 2.

Der Datenempfänger 110_1, der beispielsweise eine Basisstation sein kann, kann innerhalb oder außerhalb des Bereichs angeordnet sein.

Der Datenempfänger 110_1 kann ausgebildet sein, um eine Mehrzahl von Signalen von der Mehrzahl von Datensendern 130_1-130_n (n=7) zu empfangen, wobei die Mehrzahl von Signalen von Taktsignalen von Taktgebern der jeweiligen Datensender 130_1-130_n (n=7) abhängig sind (vgl. Fig. 4). Der Datenempfänger 110_1 kann ferner ausgebildet sein, um Signalparameter (z.B. Signaleigenschaften, wie z.B. Trägerfrequenzen oder Trägerfrequenzabweichungen) der Mehrzahl von empfangenen Signalen zu ermitteln (z.B. auszuwerten oder zu schätzen).

Bei Ausführungsbeispielen kann der Datenempfänger 110_1 ferner ausgebildet sein, um zumindest einen Umweltparameter des Bereichs 150, dem die Taktgeber der Datensender 130_1-130_n (n=7) ausgesetzt sind, basierend auf den ermittelten Signalparametern zu ermitteln (z.B. zu schätzen).

Alternativ kann der Datenempfänger 110_1 auch ausgebildet sein, um die ermittelten Signalparameter an einen zentralen Server 140 (z.B. Head End) des Systems 100 zu übermitteln, wobei der zentrale Server 140 ausgebildet sein kann, um basierend auf den von dem Datenempfänger 110_1 ermittelten Signalparametern den zumindest einen Umweltparameter des Bereichs 150 zu ermitteln, dem die Taktgeber der Datensender 130_1-130_n (n=7) ausgesetzt sind. Natürlich ist es genauso möglich, dass der Datenempfänger 110_1 basierend auf den ermittelten Signalparametern Umweltparameter des Bereichs 150 ermittelt und diese an den zentralen Server 140 (z.B. Head End) des Systems 100 für eine weitere Verarbeitung übermittelt, wie z.B. für eine Ermittlung eines Umgebungszustands (z.B. Erdbeben, Sturm, Regen, Stau) des Bereichs basierend auf den ermittelten Umweltparametern oder basierend auf einer Verteilung der ermittelten Umweltparameter.

Wie in Fig. 8 beispielhaft gezeigt ist, kann das System einen weiteren Datenempfänger 110_2, wie z.B. eine weitere Basisstation aufweisen, wobei der weitere Datenempfänger 110_2 ausgebildet sein kann, um eine Mehrzahl von Signalen von einer Mehrzahl von Datensendern 130_6, 130_7, die in dem Bereich angeordnet sind, zu empfangen, wobei die Mehrzahl von Signalen von Taktsignalen von Taktgebern der jeweiligen Datensender abhängig sind. Der weitere Datenempfänger 110_2 kann dabei Signale von Datensendern (z.B. Datensender 130_6 in Fig. 8) empfangen, die ebenfalls vom Datenempfänger 110_1 empfangen werden oder aber auch Signale von Datensendern (z.B. Datensender 130_8 in Fig. 8), die nicht von dem Datenempfänger 110_1 empfangen werden. Ferner kann der weitere Datenempfänger ausgebildet sein, um Signalparameter (z.B. Signaleigenschaften, wie z.B. Trägerfrequenzen oder Trägerfrequenzabweichungen) der Mehrzahl von empfangenen Signalen zu ermitteln.

Bei Ausführungsbeispielen kann der weitere Datenempfänger 110_2 ausgebildet sein, um zumindest einen Umweltparameter des Bereichs 150 basierend auf den ermittelten Signalparametern zu ermitteln. Natürlich kann der weiteren Datenempfänger 110_2 auch ausgebildet sein, um die ermittelten Signalparameter an den zentralen Server 140 zur weiteren Verarbeitung zu übermitteln.

Bei Ausführungsbeispielen kann der Datenempfänger 110_1 (und/oder der weitere Datenempfänger 110_2 oder der zentrale Server 140) ausgebildet sein, um die ermittelten Signalparameter zu kombinieren, um zumindest einen kombinierten Signalparameter zu erhalten, wobei der zumindest eine Umweltparameter basierend auf dem zumindest einem kombinierten Signalparameter ermittelt wird.

Bei Ausführungsbeispielen können beim Kombinieren der ermittelten Signalparameter zumindest zwei Gruppen (z.B. echte Teilmengen (z.B. disjunkte oder sich überlappende Teilmengen)) von Signalparametern kombiniert werden, um für die zumindest zwei Gruppen von Signalparametern zumindest zwei kombinierte Signalparameter zu erhalten, wobei der zumindest eine Umweltparameter des Bereichs basierend auf den zumindest zwei kombinierten Signalparametern ermittelt wird.

Beispielsweise können zumindest zwei Gruppen von unterschiedlichen Signalparametern (z.B. erste Gruppe: Trägerfrequenzen (oder Trägerfrequenzabweichungen); zweite Gruppe: Signalleistungen) kombiniert werden, um zumindest zwei unterschiedliche kombinierte Signalparameter zu erhalten. Natürlich können auch zumindest zwei Gruppen von gleichen Signalparametern (z.B. erste Gruppe: Trägerfrequenzen (oder Trägerfrequenzabweichungen); zweite Gruppe: Trägerfrequenzen (oder Trägerfrequenzabweichungen)) kombiniert werden, um zumindest zwei gleiche kombinierte Signalparameter zu erhalten.

Beispielsweise kann für jeden der zumindest zwei kombinierten Signalparameter ein Umweltparameter des Bereichs 150 ermittelt werden, um zumindest zwei Umweltparameter (z.B. unterschiedliche Umweltparameter (z.B. Temperatur, Luftdruck, Luftfeuchtigkeit) oder gleiche Umweltparameter (z.B. Temperaturen, Luftdrücke, Luftfeuchtigkeiten)) des Bereichs 150 zu erhalten. Optional können die zumindest zwei Umweltparameter [z.B. im Falle von gleichen Umweltparametern) kombiniert werden, um einen kombinierten Umweltparameter zu erhalten. Natürlich können auch (jeweils) mehrere (unterschiedliche) Umweltparameter basierend auf den zumindest zwei kombinierten Signalparametern ermittelt werden.

Bei Ausführungsbeispielen können beim Kombinieren der ermittelten Signalparameter alle ermittelten Signalparameter (z.B. die Menge von ermittelten Signalparametern) oder eine Gruppe von Signalparametern (z.B. eine (echte) Teilmenge von ermittelten Signalparametern) kombiniert werden, um einen kombinierten Signalparameter zu erhalten, wobei der zumindest eine Umweltparameter basierend auf dem einen kombinierten Signalparameter ermittelt wird.

Beispielsweise können ein Umweltparameter oder mehrere (unterschiedliche) Umweltparameter basierend auf dem einen kombinierten Signalparameter ermittelt werden.

Bei Ausführungsbeispielen können die Signalparameter basierend auf einer Mittelung, Gewichtung oder Filterung kombiniert werden.

Bei Ausführungsbeispielen kann der Datenempfänger 110_1 (und/oder der weitere Datenempfänger 110_2 oder der zentrale Server 140) ausgebildet sein, um zumindest zwei Umweltparameter des Bereichs 150 basierend auf den ermittelten Signalparametern oder kombinierten Signalparametern zu ermitteln, und um die zumindest zwei Umweltparameter zu kombinieren, um zumindest einen kombinierten Umweltparameter des Bereichs 150 zu erhalten.

Beispielsweise kann zumindest für eine Teilmenge der ermittelten Signalparameter jeweils ein Umweltparameter ermittelt werden (z.B. ein Umweltparameter pro ermittelten Signalparameter). Natürlich ist es auch möglich, dass zuvor zumindest zwei Gruppen (z.B. echte Teilmengen (z.B. disjunkte oder sich überlappende Teilmengen)) von Signalparametern kombiniert werden, um für die zumindest zwei Gruppen von Signalparametern zumindest zwei kombinierte Signalparameter zu erhalten, wobei für zumindest zwei der kombinierten Signalparameter jeweils ein Umweltparameter ermittelt wird. Optional können auch mehr als ein Umweltparameter (z.B. Temperatur, Luftdruck, ...) je Signalparameter oder je kombinierten Signalparameter ermittelt werden.

Bei Ausführungsbeispielen kann der Datenempfänger 110_1 (und/oder der weitere Datenempfänger 110_2 oder der zentrale Server 140) ausgebildet sein, um eine Verteilung von Umweltparametern in dem Bereich basierend auf den zumindest zwei ermittelten Umweltparametern oder kombinierten Umweltparametern zu ermitteln.

Bei Ausführungsbeispielen kann der Datenempfänger 110_1 (und/oder der weitere Datenempfänger 110_2 oder der zentrale Server 140) ausgebildet sein, um basierend auf der ermittelten Verteilung von Umweltparametern einen Umgebungszustand (z.B. Erdbeben, Sturm, Regen, Stau) des Bereichs 150 zu ermitteln.

Im Folgenden werden detaillierte Ausführungsbeispiele der vorliegenden Erfindung beschrieben.

### 2.1 Kombination mehrerer Schätzwerte zu Gesamtschätzwert

Wie bereits erwähnt wurde, kann bei Ausführungsbeispielen basierend auf einer ermittelten Verteilung von Umweltparametern ein Umgebungszustand ermittelt werden.

Beispielsweise kann basierend auf einem geografischem Vibrationsprofil beispielsweise ein Erdbeben erkannt und eine Warnung ausgeben werden. Beispielsweise kann basierend auf einem Temperaturprofil eine Sturmwarnung ausgegeben werden.

Es gibt auch Parameter die den Kanal charakterisieren:
- Signal-Rausch-Verhältnis;
- Signalleistung (RSSI), Kanalphase, Kanaldämpfung;
- Dispersion in dem Kanal (Anzahl der Mehrpfade);
- Polarisationsdrehung;
- Rauschpegel;
- Man-made Noise;
- Kanallast.

Eine erhöhte Kanaldämpfung kann z.B. auf Regen deuten. Ein erhöhter Rauschpegel (z.B. durch Man-made Noise) kann z.B. auf einen Stau deuten.

Basierend auf der Empfangsleistung kann auch eine Dämpfung des Kanals zwischen beliebigen Punkten (z.B. zwischen Datensender und Datenempfänger) ermittelt werden. Das kann helfen, den aktuellen Kanal in dem gesamten Gebiet zu rekonstruieren und adaptiv über das ganze Gebiet die Kommunikation zu verbessern. Beispielsweise kann basierend auf den geschätzten Signalleistungen und dem Wissen, mit wieviel Leistung die Datensender (z.B. Knoten) senden und wieviel Gewinn die Antennen haben, die Dämpfung des Kanals ermittelt werden.

Auch ein besseres Routing [z.B. von Signalen oder Datenpaketen] wäre damit möglich. Gebiete mit aktuellem hohen Rauschpegel werden vermieden. Beispielsweise kann ein Datensender (z.B. Knoten) von zwei Datenempfängern (z.B. Basisstationen) empfangbar sein, wobei (z.B. basierend auf der ermittelten Kanaldämpfung) entschieden werden kann, über welche Basisstation die Datenübertragung erfolgt.

### 2.2 Kombination der Empfangsparameter mehrerer Datensender

Befinden sich mehrere Datensender 130_1:130_n (Sender) in einem gewissen Gebiet 150 und sind in diesem Gebiet 150 die Umgebungsbedingungen (im Wesentlichen) gleich (für alle Sender) oder zumindest annährend gleich, kann eine Kombination der geschätzten Umgebungsbedingungen oder Empfangsparameter erfolgen.

Dies ist ebenfalls möglich, wenn die Datensender 130_1:130_n (Sender) unterschiedliche Funkprotokolle verwenden. Beispielsweise kann ein erster Datensender WLAN verwenden und ein zweiter Datensender Bluetooth.

Bei Ausführungsbeispielen kann zur Verfeinerung der Schätzung der Umgebungsbedingungen (z.B. nach Abschnitt 1) eine Kombination aus mehreren Empfangsparametern oder Umgebungsbedingungen von verschiedenen Sendern durchgeführt werden.

Bei Ausführungsbeispielen können Schätzwerte (z.B. von Signalparametern und/oder Umweltparametern) von eigenen und fremden Funksystemen oder eigenen und fremden Knoten kombiniert werden. Beispielsweise können entweder getrennt Umweltparameter geschätzt und dann kombiniert werden oder Umweltparameter auf Basis von kombinierten Signalparameter geschätzt werden.

Falls mehrere Datensender 130_1:130_n (Sender) vorhanden sind, die unterschiedlich beeinflusst werden (gleiches Funksystem oder verschiedene Funksysteme) kann bei unterschiedlicher Beeinflussung von relativen Abweichungen auf Absolutwerte geschlossen werden. Alternativ können verschiedene Einflüsse separiert werden, z.B. wenn die Frequenzabweichung von Temperatur und EM-Strahlung abhängt und einer der Datensender einen TCXO besitzt, der andere nicht (z.B. WLAN Gerät vs. IOT Knoten). Durch Vergleich der Abweichungen können die temperaturinduzierten Anteile von den strahlungsinduzierten Anteilen unterschieden werden. Dafür müssen die zwei Datensender denselben Umweltbedingungen ausgesetzt sein.

Bei Ausführungsbeispielen können Schätzwerte von unterschiedlich beeinflussbaren Sendern zur Ermittlung von Absolutwerten (z.B. von Signalparametern und/oder Umweltparametern) aus Relativabweichungen (z.B. von Signalparametern und/oder Umweltparametern) kombiniert werden.

Bei Ausführungsbeispielen können Schätzwerte (z.B. von Signalparameter) von unterschiedlich beeinflussbaren Sendern zur Ermittlung der anteiligen Abweichungen verursacht durch verschiedene Umwelteinflüsse kombiniert werden.

### 2.3 Im Head-End die Messwerte bestimmen

In Systemen zur Bestimmung von Sensordaten am Sensorknoten wird herkömmlicherweise für die Bestimmung der Sensorwerte normalerweise ein Sensor eingesetzt, welcher diese Daten bestimmt. Diese Sensordaten werden somit direkt am Sensorknoten erhoben. Durch die in Abschnitt 1 gezeigten Verfahren kann mit Hilfe der Signaleigenschaften am Empfänger auf die Umweltbedingungen am Sender geschlossen werden. Sind diese Umweltbedingungen genau die Daten, welche mit Hilfe des Sensors erfasst werden sollen, kann eine Verlagerung der Bestimmung der Daten in die Basisstation oder in das Backend erfolgen.

Vorteil hiervon ist, dass der Sensorknoten nun keinen Sensor mehr benötigt oder dieser nur als zusätzliche Informationsquelle dient (z.B. zur Kombination mehrerer Werte). Außerdem wird der Stromverbrauch reduziert, da die Sensorik nicht mehr mit Strom versorgt werden muss und auch die Datenübertragung weniger Information enthält, wodurch sich die Sendedauer reduziert.

Auf der Basisstation / im Head-End können auch leicht komplexere Algorithmen ausgeführt werden, da auf dem Server mehr Rechenleistung zur Verfügung steht und die Rechenleistung durch den Einsatz mehrerer Server beliebig erhöht werden kann. Die Messwerte können außerdem noch verbessert werden, indem die Signalparameter (rx Parameter) geschätzt werden.

Auch ein Update der Algorithmen ist somit einfacher, da anstelle aller Sensorknoten nur die Basisstationen / die Head-Ends aktualisiert werden müssen.

Bei Ausführungsbeispielen findet die Bestimmung von Messwerten in der Basisstation oder im Head End statt (nicht auf den Datensendern (z.B. Zähler)).

### 2.4 Kombination mehrerer Schätzwerte zu einem Gesamtschätzwert

Bei Ausführungsbeispielen können Empfangsparameter kombiniert werden, z.B. durch Mittelung, Gewichtung, Gewichtung mit einem Faktor, Filterung, o. Ä.

Bei Ausführungsbeispielen können für die Bestimmung der Abbildungsfunktion (z.B. Temperaturkurve des Quarzes) statistische Parameter (z.B. Mittelwert) über mehrere Knoten mit gleichen Quarzen / Chargen gebildet werden.

Bei Ausführungsbeispielen hat jeder Quarz eine Quarzkurve, die wiederum eine Information über die Umweltparameter gibt. Bei Ausführungsbeispielen können Quarzkurven als Information benutzen werden. Bei Ausführungsbeispielen kann die Kombination aus mehreren Quarzkurven benutzt werden, um eine genauere Schätzung der Umweltparameter zu erreichen.

Bei Ausführungsbeispielen können Schätzwerte (z.B. von Signalparametern und/oder Umweltparametern) von mehreren Basisstationen kombiniert werden. Beispielsweise kann eine Kombination sowohl vor oder nach der Abbildung von Signalparameter auf Umweltparameter erfolgen.

Bei Ausführungsbeispielen können mindestens zwei Parameter wie Zeit, Frequenz, Symboltakt nach ihren Abbildungsfunktionen kombiniert werden, um die Schätzung der Umweltparameter zu verbessern.

Im Folgenden wird ein Beispiel einer Kombination mehrerer Schätzwerte zu einem Gesamtschätzwert beschrieben.

Beispielsweise kann ein Datensender (z.B. Knoten) über einen Temperatursensor verfügen (vgl. Fig. 4). Der Datensender (z.B. Knoten) sendet die mit dem Temperatursensor erfassten Temperaturdaten in der modulierten Primärinformation des Signals, oder mit anderen Worten, in den Nutzdaten (engl. payload) eines Datenpakets, wobei das Datenpaket von zwei Basisstationen 110_1, 110_2 empfangen wird. Die beiden Basisstationen 110_1, 110_2 können jeweils die Temperatur zusätzlich über die Empfangsträgerfrequenzabweichung und den erwarteten Zeitabstand schätzen. Pro Basisstation entstehen somit drei Schätzwerte für die Temperatur. Alle Schätzwerte können von jeder Basisstation 110_1, 110_2 an einen Head-End Server 140 geschickt werden. Optional liegen dem Server 140 mehrere Werte zu älteren Zeitpunkten des Systems vor. Der Server 140 kann ein Temperaturbestimmungsverfahren durch Kombination der verschiedenen Schätzwerte starten. Darunter zählen zum Beispiel mitteln, um den Einfluss der Basisstationen zu reduzieren.

Die Quarztemperaturkurve kann genauer bestimmt werden. Quarze vom selben Hersteller zeigen ähnliche Parameter. Im Idealfall werden Quarze aus derselben Charge der Produktionslinie verwendet. Der Mittelwert der Exemplarstreuung ist damit gleich über mehrere Knoten von dem gleichem Quarzhersteller. Aufgrund der Statistikdaten über deutlich mehr Knoten sind gemeinsame Parameter deutlich genauer zu bestimmen. Der Algorithmus auf dem Server bestimmt am Ende die Temperatur des Knotens. Falls der Server den Standort des Senders kennt (z.B. GPS Koordinaten), kann der Server die ermittelte Temperatur zu dem Ort mappen.

Ähnlich wie in dem obigen Beispiel beschrieben, kann auch für fremde Systeme die Temperatur bestimmt werden. Hier kann auch einem Ort eine gewisse Temperatur zugeordnet werden.

### 2.5 Genaue Temperaturmessung für andere Umweltparameter benutzen

Bei Ausführungsbeispielen kann ein bestimmter Umweltparameter genutzt werden, um die Genauigkeit der Bestimmung eines anderen Parameters zu verbessern (Parameter Kreuzbeziehungen).

Beispielsweise kann in einem Metering-System ein Wasservolumen/Wasserdurchfluss gemessen werden. Die Temperatur des Zählers hat dabei einen Einfluss auf die Messung. Die noch genauere Temperaturmessung kann benutzt werden, um noch genauer das Wasservolumen bzw. den Wasserdurchfluss zu bestimmen.

### 2.6 Geografische Anordnung

Typischerweise sind die Umweltparameter von ihrer geografischen Lage (Örtlichkeit) abhängig, d.h. an verschiedenen Orten herrschen andere Umgebungsbedingungen. Die räumliche Verteilung der Parameter kann genutzt werden, um z.B. Erdbeben, Sturm und/oder andere Umwelteinflüsse zu erkennen.

Bei Ausführungsbeispielen können Katastrophen aufgrund von geographischen Umweltparametern erkannt werden.

Durch die Kanalparameter wie Dämpfung, Polarisationsdrehung, Man-made Noise, Kanallast und weiteren Parametern kann der Kanal charakterisiert werden.

Bei Ausführungsbeispielen kann der Kanalzustand (zwischen jedem Sender und Empfänger) aus mehreren räumlichen Parametern bestimmt werden.

Bei Ausführungsbeispielen kann der ermittelte Kanalzustand genutzt werden, um die Übertragung zwischen Knoten und Basisstation zu optimieren (z.B. andere Datenraten / Modulationen / Wellenformen).

Ist der Kanalzustand zwischen einem Sender und mehreren Basisstationen bekannt, kann ein sog. Routing erfolgen. Beispielsweise kann ein Knoten entsprechend des Kanalzustands (dynamisch) zu der Basisstation mit den besten Kanaleigenschaften zugeordnet werden.

Bei Ausführungsbeispielen kann der ermittelte Kanalzustand genutzt werden, um das Routing von Paketen zu optimieren. Die Basisstation mit den besten Kanaleigenschaften ist für den Knoten zuständig.

Typischerweise kann der Fall eintreten, dass bestimmte Knoten nicht erreichbar sind. In dem Fall können Personen mit dem Auto in die Nähe fahren, um die schwer erreichbaren Knoten (z.B. hinter einer Metalltür) auszulesen. Die Route kann durch das Wissen des Kanals optimiert werden. Das Auto fährt die Straßen mit besserem Empfang durch anstatt Straßen mit schlechterem Empfang.

Bei Ausführungsbeispielen kann der ermittelte Kanalzustand genutzt werden, um Personen für eine mobile Auslesung zu schicken, nicht erreichte wichtige Knoten. Gleichzeitig ist bekannt, ob es in dem Gebiet Sturmrisiken usw. gibt.

Der bekannte Funkkanal gibt Information über andere/bessere Pfade zwischen der Basisstation und den Knoten. Die Pfade können gezielt ausgewählt werden indem die Richtwirkungen der Sende/Empfangsantennen geändert werden.

Bei Ausführungsbeispielen kann der ermittelte Kanalzustand genutzt werden, um die Antennenhauptstrahlrichtungen für die Basisstationen-Orte zu optimieren.

### 3 Erkennen von Fehlern der Installation oder im Betrieb durch Monitoring von Umweltparametern

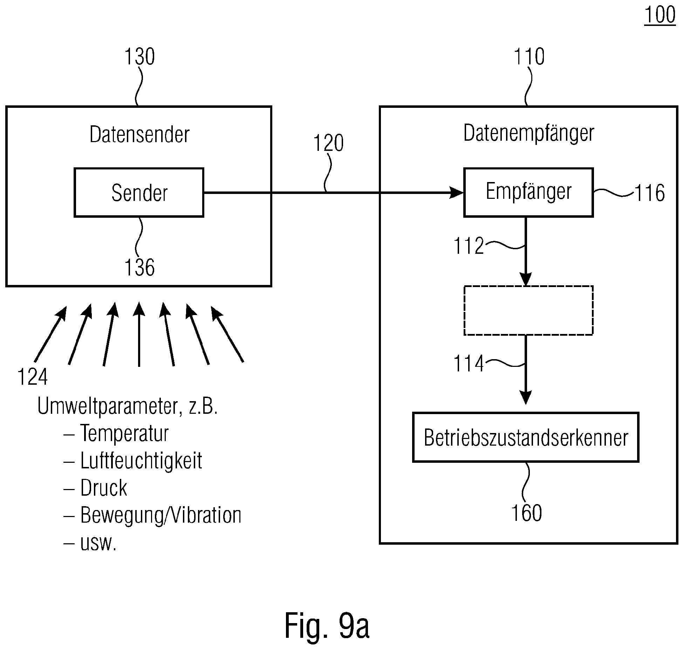

Fig. 9a zeigt ein schematisches Blockschaltbild eines Systems 100 mit einem Datenempfänger 110 und einem Datensender 130, gemäß einem Ausführungsbeispiel der vorliegenden Erfindung.

Der Datensender 130 ist konfiguriert, um zumindest ein Signal 120 (z.B. ein Signal oder eine Mehrzahl von Signalen, z.B. in gewissen Abständen) auszusenden.

Der Datenempfänger 110 (oder z.B. ein Empfänger 116 des Datenempfängers 110) ist konfiguriert, um das zumindest eine Signal 120 des Datensenders 130 zu empfangen, um zumindest einen Umweltparameter (z.B. einen Umweltparameter oder eine Mehrzahl von Umweltparametern; z.B. eine Temperatur oder mehrere Temperaturen) des Datensenders 130 oder einer Umgebung des Datensenders 130 zu erhalten.

Der Datenempfänger 110 (oder z.B. ein Betriebszustandserkenner 160 des Datenempfängers 110) ist dabei konfiguriert, um basierend auf einem Vergleich zwischen
- dem zumindest einen erhaltenen Umweltparameter 114 oder einem basierend auf dem zumindest einen erhaltenen Umweltparameter 114 ermittelten Umweltparameterverlauf (z.B. ermittelten Temperaturverlauf), und
- einem Umweltparameterreferenzprofil, das einen erwarteten Umweltparameter oder einen erwarteten Umweltparameterverlauf (z.B. erwarteten Temperaturverlauf) (z.B. über einen Zeitraum) in der Umgebung des Datensenders 130 beschreibt,
einen Betriebszustand (z.B. einen fehlerfreien oder einen fehlerbehafteten Betriebszustand) des Datensenders 130 oder einer Komponente (z.B. einer Batterie) des Datensenders 130 zu erkennen.

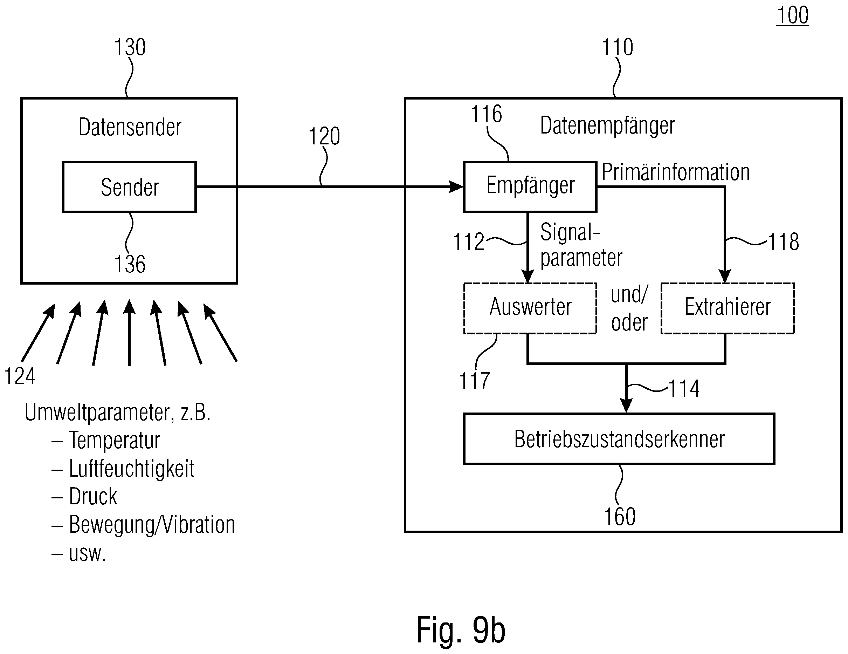

Fig. 9b zeigt ein zeigt ein schematisches Blockschaltbild des Systems 100 mit dem Datenempfänger 110 und dem Datensender 130, gemäß einem weiteren Ausführungsbeispiel der vorliegenden Erfindung.

Wie in Fig. 9b gemäß einem Ausführungsbeispiel zu erkennen ist, kann das zumindest eine Signal 120 eine Information über den jeweiligen Umweltparameter 124, wie z.B. einen jeweiligen Sensorwert 139, in einer modulierten Primärinformation 118 aufweisen (siehe auch Fig. 4). In diesem Fall kann der Datenempfänger 110 (z.B. ein Extrahierer 119 des Datenempfängers 110) konfiguriert sein, um die Information über den jeweiligen Umweltparameter aus der modulierten Primärinformation 118 des jeweiligen Signals 120 zu extrahieren (z.B. durch demodulieren und decodieren), um den zumindest einen Umweltparameter 114 zu erhalten.

Beispielsweise können von dem Datensender 130 über die Zeit eine Mehrzahl von Signalen 120 in gewissen zeitlichen Abständen ausgesendet werden, d.h. ein erstes Signal zu einem ersten Zeitpunkt, ein zweites Signal zu einem zweiten Zeitpunkt, usw., wobei jedes der Mehrzahl von Signalen eine Information über einen Umweltparameter (z.B. Temperatur) oder mehrere Umweltparameter (z.B. Temperatur und Druck) aufweisen kann. Der Datenempfänger 110 kann dementsprechend konfiguriert sein, um die Information über den jeweiligen Umweltparameter aus der modulierten Primärinformation 118 des jeweiligen Signals 120 zu extrahieren, um den jeweiligen Umweltparameter 114 zu erhalten.

Wie in Fig. 9b gemäß einem weiteren Ausführungsbeispiel zu erkennen ist, kann der Datenempfänger 110 (z.B. ein Auswerter 117 des Datenempfängers 110) alternativ auch ausgebildet sein, um basierend auf einem Signalparameter 112 des jeweiligen Signals 120 den jeweiligen Umweltparameter zu ermitteln (z.B. zu schätzen), wie dies in Abschnitt 1 ausführlich erläutert wurde, um den jeweiligen Umweltparameter 114 zu erhalten.

Beispielsweise können von dem Datensender über die Zeit eine Mehrzahl von Signalen 120 in gewissen zeitlichen Abständen ausgesendet werden, d.h. ein erstes Signal zu einem ersten Zeitpunkt, ein zweites Signal zu einem zweiten Zeitpunkt, usw., wobei der Datenempfänger 110 konfiguriert sein kann, um zumindest einen Signalparameter für das jeweilige Signal zu ermitteln, und um basierend auf dem zumindest einen Signalparameter zumindest einen Umweltparameter für das jeweilige Signal zu ermitteln.

Wie bereits erwähnt wurde, kann der Datenempfänger 110 konfiguriert sein, um basierend auf einem Vergleich zwischen
- dem zumindest einen erhaltenen Umweltparameter 114 oder einem basierend auf dem zumindest einen erhaltenen Umweltparameter 114 ermittelten Umweltparameterverlauf (z.B. ermittelten Temperaturverlauf), und
- einem Umweltparameterreferenzprofil, das einen erwarteten Umweltparameter oder einen erwarteten Umweltparameterverlauf (z.B. erwarteten Temperaturverlauf) (z.B. über einen Zeitraum) in der Umgebung des Datensenders 130 beschreibt,
einen Betriebszustand (z.B. einen fehlerfreien oder einen fehlerbehafteten Betriebszustand) des Datensenders 130 oder einer Komponente (z.B. einer Batterie) des Datensenders 130 zu erkennen.

Beispielweise kann das Umweltparameterreferenzprofil einen erwarteten Umweltparameter in der Umgebung des Datensenders 130 beschreiben. Dies ist zum Beispiel dann gegeben, wenn der Datensender 130 (z.B. Sensorknoten) in einer Umgebung mit definierten Umgebungsbedingungen eingesetzt wird, wie z.B. in einem Kühlraum oder einem klimatisierten Rechenzentrum. In diesem Fall kann eine zu große Abweichung (z.B. eine Abweichung, die größer oder gleich einem vorgegebenen Schwellwert ist) zwischen dem erhaltenen Umweltparameter und dem erwarteten Umweltparameter auf einen fehlerhaften Betriebszustand des Datensenders 130 oder einer Komponente des Datensenders 130 hindeuten.

Alternativ kann das Umweltparameterreferenzprofil einen erwarteten Umweltparameterverlauf in der Umgebung des Datensenders 130 beschreiben. Dies ist zum Beispiel dann gegeben, wenn der Datensender 130 (z.B. Sensorknoten) in einer Umgebung mit veränderlichen Umgebungsbedingungen eingesetzt wird, wie z.B. auf einem Dach eines Gebäudes mit von Tages- und Jahreszeiten abhängigen Umweltparametern. In diesem Fall kann eine zu große Abweichung (z.B. eine Abweichung, die größer oder gleich einem vorgegebenen Schwellwert ist) zwischen dem basierend auf dem zumindest einen erhaltenen Umweltparameter 114 (und z.B. einem oder mehreren zuvor erhaltenen Umweltparameter) ermittelten Umweltparameterverlauf und dem erwarteten Umweltparameterverlauf auf einen fehlerhaften Betriebszustand des Datensenders 130 oder einer Komponente des Datensenders 130 hindeuten.

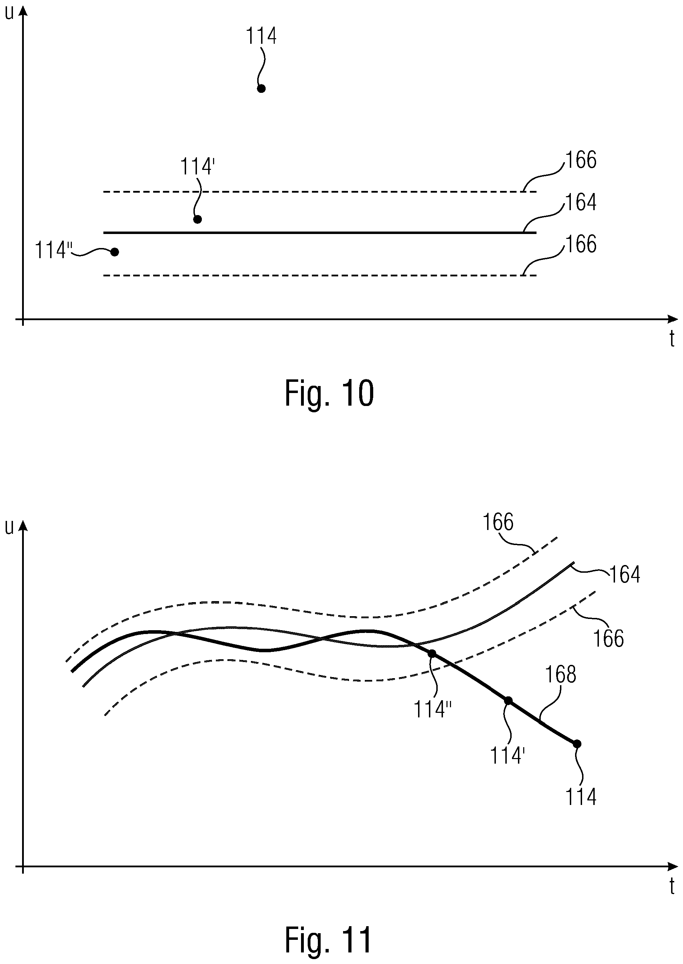

Fig. 10 zeigt in einem Diagramm einen erhaltenen Umweltparameter 114 verglichen mit einem erwarteten Umweltparameter 164, z.B. beim Einsatz des Datensender 130 (z.B. Sensorknoten) in einer Umgebung mit definierten Umgebungsbedingungen. Dabei beschreibt die Ordinate den Umweltparameter und die Abszisse die Zeit. Wie in Fig. 10 zu erkennen ist, ist eine Abweichung zwischen dem erhaltenen Umweltparameter 114 größer als ein vorgegebener Schwellwert 166, was auf einen fehlerhaften Betriebszustand des Datensenders 130 oder einer Komponente des Datensenders 130 hindeuten kann. Abweichungen zwischen zuvor erhaltenen Umweltparametern 114' und 114" sind hingegen kleiner als der vorgegebener Schwellwert 166, was auf einen vorherigen fehlerfreien Betriebszustand des Datensenders 130 hindeuten kann.

Fig. 11 zeigt in einem Diagramm einen basierend auf dem zumindest einen erhaltenen Umweltparameter 114 und mehreren zuvor erhaltenen Umweltparametern 114' und 144" ermittelten Umweltparameterverlauf 168 und einen erwarteten Umweltparameterverlauf, z.B. beim Einsatz des Datensenders 130 (z.B. Sensorknoten) in einer Umgebung mit veränderlichen Umgebungsbedingungen. Dabei beschreibt die Ordinate den Umweltparameter und die Abszisse die Zeit. Wie in Fig. 11 zu erkennen ist, ist eine Abweichung zwischen dem ermittelten Umweltparameterverlauf 168 größer als ein vorgegebener Schwellwert 166, was auf einen fehlerhaften Betriebszustand des Datensenders 130 oder einer Komponente des Datensenders 130 hindeuten kann.

Bei Ausführungsbeispielen kann der in Fig. 9b gezeigte Datenempfänger 110 auch ausgebildet sein, um den aus der modulierten Primärinformation 118 extrahierten Umweltparameter und den basierend auf dem Signalparameter 117 ermittelten Umweltparameter zu kombinieren [z.B. durch Mittelwertbildung oder gewichtete Mittelwertbildung], um zumindest einen kombinierten Umweltparameter zu erhalten, wobei der Datenempfänger konfiguriert sein kann, um basierend auf einem Vergleich zwischen
- dem zumindest einen kombinieren Umweltparameter oder einem basierend auf dem zumindest einen kombinierten Umweltparameter ermittelten Umweltparameterverlauf, und
- dem Umweltparameterreferenzprofil 164, das den erwarteten Umweltparameter oder den erwarteten Umweltparameterverlauf in der Umgebung des Datensenders 130 beschreibt,
einen Betriebszustand des Datensenders 130 oder einer Komponente des Datensenders 130 zu erkennen.

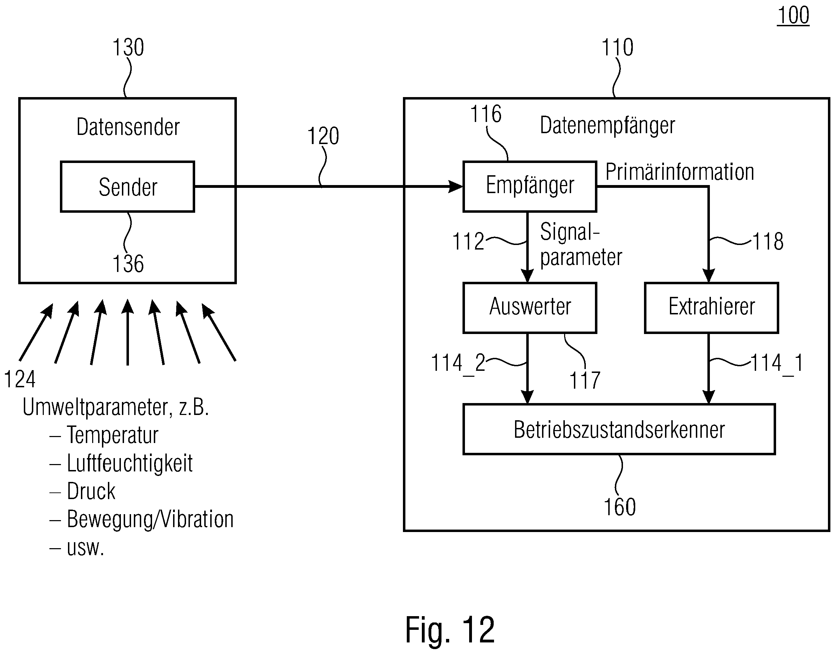

Fig. 12 zeigt ein schematisches Blockschaltbild des Systems 100 mit dem Datenempfänger 110 und dem Datensender 130, gemäß einem weiteren Ausführungsbeispiel der vorliegenden Erfindung.

Bei dem in Fig. 12 gezeigtem Ausführungsbeispiel kann der Datenempfänger 110 konfiguriert sein, um zumindest ein Signal 120 des Datensenders 130 zu empfangen, wobei das zumindest eine Signal 120 jeweils in einer modulierten Primärinformation einen von dem Datensender 130 gemessenen Umweltparameter aufweist, wobei der Datenempfänger 110 konfiguriert sein kann, um den jeweiligen gemessenen Umweltparameter aus der jeweiligen modulierten Primärinformation zu extrahieren, um zumindest einen gemessenen Umweltparameter 114_1 zu erhalten.

Der Datenempfänger 110 kann ferner konfiguriert sein, um jeweils einen Signalparameter 112 des zumindest einen Signals, das von einem Taktsignal 132 eines Taktgebers 134 des Datensenders 130 abhängig ist (siehe Fig. 4), zu ermitteln, und um basierend auf dem jeweiligen Signalparameter 112 einen jeweiligen Umweltparameter zu schätzen, dem der Taktgeber 134 des Datensenders 130 oder das jeweilige Signal 120 ausgesetzt ist, um zumindest einen geschätzten Umweltparameter 114_2 zu erhalten.

Der Datenempfänger 110 kann ferner konfiguriert sein, um basierend auf einem Vergleich zwischen dem zumindest einem gemessenen Umweltparameter 114_1 und dem zumindest einen geschätzten Umweltparameter 114_2 einen Betriebszustand des Datensenders 130 oder einer Komponente des Datensenders 130 zu erkennen.

Beispielsweise kann eine zu große Abweichung zwischen dem gemessenen Umweltparameter 114_1 und dem geschätzten Umweltparameter 114_2 auf einen Defekt des Datensenders 130 oder einer Komponente des Datensenders 130 hindeuten.

Im Folgenden werden detaillierte Ausführungsbeispiele des in den Fig. 9a und 9b gezeigten Datenempfängers 110 näher beschrieben. Die nachfolgende Beschreibung ist jedoch genauso auf den in Fig. 12 gezeigten Datenempfänger 110 anwendbar.

In Abschnitt 1 wurde gezeigt, dass aus Empfangsparametern Umweltparameter geschätzt werden können. In Abschnitt 2 wurde gezeigt, dass die Bestimmung der Sensordaten anstelle der direkten Messung im Sensorknoten auch in die Basisstation / den Head End Server verlagert werden kann.

Bestimmte Profile, Werte oder Muster von Umweltparametern können auf Fehler im Sensorknoten hindeuten. So können unterschiedliche Fehler erkannt werden:
- Defekte Hardware (z.B. Verstärker defekt, Sensor defekt, usw.),
- Knoten vertauscht, an der Falsche Stelle installiert,
- Firmware vertauscht, falsche Version,
- Firmwarefehler,
- Wichtige Parameter Knoten, und/oder
- Manipulationserkennung (andere HW drin / Quarz z.B ).

Diese Informationen können wiederum benutzt werden, um fehlerhafte Hardware (z.B. Datensender bzw. Komponenten der Datensender) zu erkennen und auszutauschen.

In bidirektionalen Systemen kann auf andere Modems umgeschaltet werden oder die Konfiguration geändert werden (beispielsweise kann die Datenrate angepasst oder das Modulationsverfahren geändert werden). Auch eine neue Firmware aufzuspielen wäre möglich, um den Fehler zu beheben.

Die Parameter (Signalparameter), die dafür verwendet werden, sind z.B.
- Empfangsträgerfrequenz,
- Empfangszeitpunkte,
- Empfangssymbolrate,
- Empfangsmodulationsindex (bei Frequenzumtastungsverfahren, z.B. bei FSK oder GMSK), und/oder
- Doppler-Frequenz (nur bei Vibration/Bewegung).

Aus den Parametern (Signalparametern) kann eine Information über die Umweltparameter ermittelt werden:
- Temperatur,
- Luftfeuchtigkeit,
- Druck,
- Elektromagnetische Strahlung,
- Helligkeit, und/oder
- Vibration/Bewegung.

Beispielsweise kann eine ständig erhöhte Temperatur auf einen defekten Sensor hindeuten, oder auf fließende Ströme, die alles aufheizen. Eine falsch konfigurierte Schnittstelle (engl. port) auf "active high" anstatt auf "active low" kann beispielsweise einen konstant fließenden Strom verursachen. Dies könnte bei Ausführungsbeispielen erkannt werden.

Durch das Tracking der Temperatur kann auch garantiert werden, dass die Hardware nur in bestimmten zulässigen Temperaturbereichen betrieben wird. Das ist auch wichtig falls bestimmte Komponenten ausfallen, um nachzuweisen, dass die Komponenten nicht außerhalb eines definierten Temperaturbereichs betrieben worden sind (Haftungsausschluss).

Ein kumulatives Temperaturprofil über mehrere Jahre hinaus kann auch für eine Abschätzung der restlichen (Batterie-)Lebensdauer benutzt werden. Das gilt auch für andere Bauteile zusätzlich zu der Batterie.

Es gibt auch Parameter die den Kanal charakterisieren, wie z.B.
- Signal-Rausch-Verhältnis,
- Signalleistung (RSSI), Kanalphase, Kanaldämpfung,
- Dispersion in dem Kanal (Anzahl der Mehrpfade),
- Polarisationsdrehung,
- Rauschpegel,
- Man-made Noise, und/oder
- Kanallast.

Diese Parameter können auch für die Erkennung von Fehlern benutzt werden. Eine schwächere Leistung als erwartet oder immer wieder ausfallender Empfang kann auf einen defekten Verstärker hindeuten. Auch ein Vergleich zwischen (erhaltenen Umweltparametern von) zwei Knoten, die in der Nähe sind, ist möglich, um festzustellen, dass einer der beiden Knoten defekt ist.

### 3.1 Fehler erkennen

Bei manchen Ausführungsbeispielen verfügt der Datensender 130 (z.B. Knoten) über einen Temperatursensor. Der Datensender sendet die Temperaturdaten in den Nutzdaten (engl. payload), z.B. in einem Datenpaket. Das Datenpaket wird von einem oder mehreren Datenempfängern 110 (z.B. Basisstationen) empfangen. Die Datenempfänger 110 schätzen jeweils die Temperatur zusätzlich über die Empfangsträgerfrequenzabweichung und den erwarteten Zeitabstand nach Abschnitt 1. Pro Datenempfänger 110 entstehen somit drei Schätzwerte für die Temperatur.

Die Information über den Zeitabstand ist aussagekräftiger, da sie den akkumulierten Temperaturverlauf (also dem Mittelwert zwischen den beiden Zeitpunkten) entspricht. Um solche Informationen mit einem Sensor zu erreichen, müsste der Sensor immer eingeschaltet bleiben, was nicht praktikabel ist. Die Basisstation / das Head End kann den Temperaturverlauf im Datensender 130 nach Abschnitt 2 ermitteln.

Typische Temperaturprofile sind dem Datenempfänger / Head End bekannt und gespeichert. Die erwarteten Profile können (z.B. einmalig) (z.B. im Labor) für die Firmware- und Hardwarekombination unter bestimmten Umgebungstemperaturbedingungen (z.B. im Winter, Dezember, in der Nacht, am Tag, und im Sommer, Juli, auch uhrzeitabhängig) vermessen und dann gespeichert werden.

Die Temperaturprofile der Datensender 130 (z.B. Sensorknoten) dürfen nur in bestimmen Grenzen auftreten. Andere Werte überschreiten die Schwelle(n) und werden als fehlerhaft erkannt.

Bei Ausführungsbeispielen kann durch die zeitlichen Verläufe der Umgebungsvariablen auf Fehler des Knotens geschlossen werden. Hierfür gibt es Referenzverläufe (z.B. die vorab aufgezeichnet wurden), welche bei der Auswertung herangezogen werden.

Zusätzlich zu den Fehlern können auch aus den gemessenen Temperaturprofilen Erwartungswerte des Knotens gebildet werden. Ein Beispiel hierfür ist die Batterielebensdauer. Ein anderes Beispiel sind temperaturabhängige Alterungen der Hardware oder der Quarze.

Bei Ausführungsbeispielen kann durch den Verlauf von Umgebungsvariablen auf eine Lebensdauer von Bausteinen geschlossen werden.

Bei Ausführungsbeispielen kann durch das akkumulierte Temperaturprofil (z.B. durch den Zeitquarz) die akkumulierte Temperatur und damit die akkumulierte Batteriebelastung bestimmt werden und daraus die verbleibende Lebensdauer der Batterie geschätzt werden.

Bei Ausführungsbeispielen kann aus der Differenz zwischen mindestens zwei Knoten die benachbart zu einander angeordnet sind auf einen Fehler geschlossen werden, falls die Abweichung zwischen beiden Knoten eine gewisse Differenz übersteigt.

Bei Ausführungsbeispielen sind auch relative Profile möglich. Es können so, ohne das Wissen aus Abschnitt 1 und Abschnitt 2 (Quarzkurven) fehlerhafte Knoten, die Ausreißer liefern, erkannt werden.

### 3.2 Verläufe mehrerer Parameter kombinieren

Bei Ausführungsbeispielen können Verläufe von mehreren Parametern kombiniert werden. Beispielsweise können ein Temperatur- und ein Leistungsprofil kombiniert werden, um zu erkennen, ob ein Fehler am Leistungsverstärker (engl. power amplifier) vorliegt.

Bei Ausführungsbeispielen können die Verläufe mehrerer Parameter kombiniert werden, um daraus auf Fehler zu schließen.

Im Fall von erkannten Fehlern kann ferner abgewartet werden, ob sich der Fehler über mindestens ein zweites Signal (z.B. Paket, Burst) oder unter Verwendung eines weiteren Datenempfängers 110 bestätigt, um eine Fehldetektionen zu reduzieren. Dies ist optional auch mit dem gleichen Datenempfänger 110 möglich, wenn der Datensender 130 mehrfache Aussendungen vornimmt.

Bei Ausführungsbeispielen kann zur Sicherstellung von erkannten Fehlern eine Kombination von mehreren Aussendungen erfolgen.

### 3.3 Feinere Frequenzverschiebungen

Die unterschiedlichen Bausteine auf der Hardware des Knotens sind unterschiedlich weit von dem Temperatursensor oder von dem Quarz entfernt. Das ergibt unterschiedliche Temperaturkopplungskoeffizienten und unterschiedliche Verzögerungen in den Temperaturverläufen.

Es kann der Frequenzverlauf innerhalb eines Datenpakets verfolgt werden indem immer wieder über wenige Bits eine Frequenzschätzung durchführt wird.

Durch Frequenzänderungen innerhalb des Datenpakets kann auf Temperaturänderungen innerhalb des Datenpakets geschlossen werden. Es sollte jedoch sichergestellt werden, dass diese Änderungen nicht durch eine Bewegung des Datensenders 130 (z.B. Knotens) bzw. des Datenempfängers 110 (z.B. Basisstation) entstanden sind (stationäres Szenario).

Solche feinen Temperaturänderungen zeigen wann eine Steuereinheit (z.B. Mikrokontroller oder Prozessor) des Datensenders gestartet wurde, wann der Oszillator und der Leistungsverstärker eingeschalten worden sind und so weiter. Dies kann wiederum helfen den konkreten Fehler zu erkennen bzw. einzugrenzen.

Hierzu werden Temperaturprofile für sehr kurze Zeit gemessen und im Datenempfänger (z.B. Basisstation) oder einem zentralen Server (z.B. Head End Server) gespeichert. Aus den Temperaturprofilen können die Fehlersyndrome bestimmt werden.

Bei Ausführungsbeispielen kann der Frequenzerlauf entlang eines Datenpakets / Sub-Datenpakets (z.B. im Falle von Telegramm-Splitting [7]) bestimmt werden und daraus der Temperaturverlauf. Aus diesem Verlauf kann mit Hilfe von Referenzprofilen auf Fehler geschlossen werden.

Bei Ausführungsbeispielen kann durch den Temperaturverlauf innerhalb eines Datenpakets der konkrete fehlerhafte Baustein identifiziert werden.

Bei Ausführungsbeispielen können Verzögerungen in den Temperaturverläufen berücksichtigt werden.

### 3.4 Erkennung von Bausteinen des Datensenders (z.B. Endpunkt)

Die Funkchips (von Datensendern) verfügen über PLL-Schleifen (PLL = phase-locked loop, dt. Phasenregelschleife), um die Trägerfrequenz aus der Quarzfrequenz zu generieren. Unterschiedliche Funkchips haben unterschiedliche PLL-Schleifen. Unterschiedliche PLL-Schleifen haben unterschiedliche PLL-Schrittweiten. Wenn der Datensender (z.B. Endpunkt) einen Kanalwechsel vornimmt, dann kann (datenempfängerseitig) der Frequenzfehler zum erwarteten Kanaloffset errechnet werden und daraus auch die Schrittweite. Durch die Schrittweite ist dann der Funkchip bekannt.

Bei Ausführungsbeispielen kann der gewollte Kanal bestimmt werden, um die Frequenzdifferenz unter Berücksichtigung des gewünschten Kanals zu errechnen. Hierfür kann die Frequenz mit der Modulo-Operation durch die Kanalbandbreite dividiert werden. Der Kanalabstand muss hierbei größer sein als der Quarzfehler.

Analog kann auch im Zeitbereich die Zeitschrittweise des Zeitgebers (engl. timer) bestimmt werden und daraus die verbaute Hardware auf dem Datensender (z.B. Knoten).

Bei Ausführungsbeispielen kann, um die Zeitdifferenz unter Berücksichtigung eines Zeitfehlers bedingt durch den Sendechip zu berechnen, der Zeitpunkt auch Modulo gerechnet werden (z.B. auf Symboldauer oder Subdatenpaketdauer oder Telegramdauer, Zeitgeberauflösung). Der Rest der Division gibt den gewünschten Zeitfehler.

Bei Ausführungsbeispielen kann aus der Statistik des Quarzes der genaue Quarztyp bestimmt werden.

Bei Ausführungsbeispielen kann der Datensender seine Zusammensetzung (d.h. die verbauten Bausteine) auch in einem Datenpaket kommunizieren. Die Erkennung kann in diesem Fall für eine Gegenprobe (engl. cross check) verwendet werden.

### 3.5 Falsche Installationen oder Manipulationen erkennen

Mit dem Wissen des genauen Funkchips bzw. des genauen Quarzes kann überprüft werden, ob der richtige Datensender (z.B. Knoten) an der richtigen Stelle installiert ist. Zusätzlich kann z.B. über die GPS Koordinaten überprüft werden, ob der richtige Datensender (z.B. Knoten) mit der richtigen Hardware an der richtigen Stelle installiert worden ist.

Bei Ausführungsbeispielen kann mit Hilfe der ermittelten Hardware-Konfiguration falsche Installationen erkannt werden.

Bei Ausführungsbeispielen kann, wenn sich die Hardware unerwartet geändert hat, entweder bestätigt werden, dass der richtige Datensender ausgetauscht wurde, oder eine Manipulation des Datensenders erkannt werden.

### 4. Weitere Ausführungsbeispiele

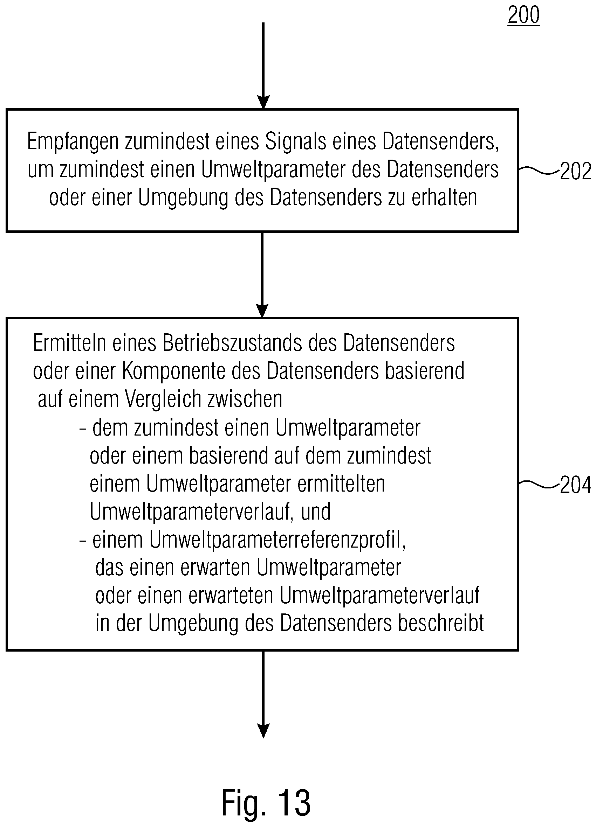

Fig. 13 zeigt ein Flussdiagramm eines Verfahrens 200 zum Ermitteln eines Betriebszustandes eines Datensenders oder einer Komponente des Datensenders, gemäß einem Ausführungsbeispiel der vorliegenden Erfindung. Das Verfahren 200 umfasst einen Schritt 202 des Empfangens zumindest eines Signals eines Datensenders, um zumindest einen Umweltparameter des Datensenders oder einer Umgebung des Datensenders zu erhalten. Ferner umfasst das Verfahren 200 einen Schritt 204 des Ermittelns eines Betriebszustands des Datensenders oder einer Komponente des Datensenders basierend auf einem Vergleich zwischen
- dem zumindest einen Umweltparameter oder einem basierend auf dem zumindest einem Umweltparameter ermittelten Umweltparameterverlauf, und
- einem Umweltparameterreferenzprofil, das einen erwarteten Umweltparameter oder einen erwarteten Umweltparameterverlauf in der Umgebung des Datensenders beschreibt.

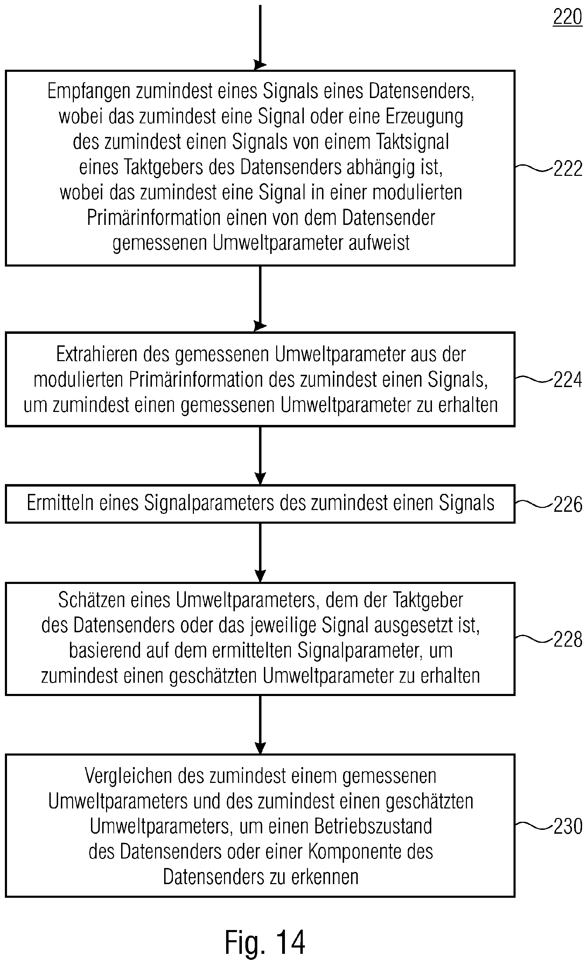

Fig. 14 zeigt ein Flussdiagramm eines Verfahrens 220 zum Ermitteln eines Betriebszustandes eines Datensenders oder einer Komponente des Datensenders, gemäß einem weiteren Ausführungsbeispiel der vorliegenden Erfindung. Das Verfahren 220 umfasst einen Schritt 222 des Empfangen zumindest eines Signals eines Datensenders, wobei das zumindest eine Signal oder eine Erzeugung des zumindest einen Signals von einem Taktsignal eines Taktgebers des Datensenders abhängig ist, wobei das zumindest eine Signal in einer modulierten Primärinformation einen von dem Datensender gemessenen Umweltparameter aufweist. Ferner umfasst das Verfahren 220 einen Schritt 224 des Extrahierens des gemessenen Umweltparameter aus der modulierten Primärinformation des zumindest einen Signals, um zumindest einen gemessenen Umweltparameter zu erhalten. Ferner umfasst das Verfahren 220 einen Schritt 226 des Ermittelns eines Signalparameters des zumindest einen Signals. Ferner umfasst das Verfahren 220 einen Schritt 228 des Schätzens eines Umweltparameters, dem der Taktgeber des Datensenders oder das jeweilige Signal ausgesetzt ist, basierend auf dem ermittelten Signalparameter, um zumindest einen geschätzten Umweltparameter zu erhalten. Ferner umfasst das Verfahren 220 einen Schritt 230 des Vergleichens des zumindest einem gemessenen Umweltparameters und des zumindest einen geschätzten Umweltparameters, um einen Betriebszustand des Datensenders oder einer Komponente des Datensenders zu erkennen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

- [1]: https://de.wikipedia.org/wiki/Schwingquarz
- [2]: https://www.nxp.com/docs/en/application-note/AN3251.pdf
- [3]: https://de.wikipedia.org/wiki/Quadraturphasenumtastung#/media/ File:QPSK_Gray_Coded.svg
- [4]: http://eur-lex.europa.eu/legal-content/DE/TXT/PDF/?uri=uriserv:OJ.L_.2016.119.01.0001.01.DEU
- [5]: https://www.sii.co.jp/en/quartz/circuit-design/
- [6]: https://de.wikipedia.org/wiki/Normalverteilung
- [7]: ETSI TS 103 357 Specification

## Patentansprüche

1. Datenempfänger (110),
wobei der Datenempfänger (110) konfiguriert ist, um zumindest ein Signal (120) eines Datensenders (130) zu empfangen, um zumindest einen Umweltparameter des Datensenders (130) oder einer Umgebung des Datensenders (130) zu erhalten,
wobei der Datenempfänger (110) konfiguriert ist, um basierend auf einem Vergleich zwischen
- dem zumindest einen erhaltenen Umweltparameter (114) oder einem basierend auf dem zumindest einen erhaltenen Umweltparameter (114) ermittelten Umweltparameterverlauf (168), und
- einem Umweltparameterreferenzprofil (164), das einen erwarteten Umweltparameter oder einen erwarteten Umweltparameterverlauf in der Umgebung des Datensenders (130) beschreibt,
einen Betriebszustand des Datensenders (130) oder einer Komponente des Datensenders (130) zu erkennen, **dadurch gekennzeichnet, dass**
das zumindest eine Signal (120) den jeweiligen Umweltparameter in einer modulierten Primärinformation aufweist und der Datenempfänger (110) konfiguriert ist, um einen
jeweiligen Signalparameter aus der modulierten Primärinformation zu extrahieren, um den zumindest einen Umweltparameter (114) zu erhalten,
wobei die modulierte Primärinformation eine ID des Datensenders, eine Synchronisationssequenz, Nutzdaten und/oder Dummy-Daten repräsentiert, und
wobei der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben ist.

2. Datenempfänger (110) nach dem vorangehenden Anspruch,
wobei der ermittelte Umweltparameterverlauf (168) ferner auf zumindest einem zuvor erhaltenen Umweltparameter (114', 114") basiert.

3. Datenempfänger (110) nach einem der Ansprüche 1 bis 2,
wobei das zumindest eine Signal (120) oder eine Erzeugung des zumindest einen Signals von einem Taktsignal (132) eines Taktgebers (134) des Datensenders (130) abhängig ist und der Datenempfänger (110) konfiguriert ist, um den Signalparameter des jeweiligen Signals (120) zu ermitteln und um basierend auf dem Signalparameter den jeweiligen Umweltparameter (114) zu ermitteln, dem der Taktgeber (134) des Datensenders (130) oder das jeweilige Signal (120) ausgesetzt ist.

4. Datenempfänger (110) nach Anspruch 3,
wobei der Datenempfänger (110) konfiguriert ist, um den zumindest einen aus der modulierten Primärinformation extrahierten Umweltparameter und den zumindest einen basierend auf dem Signalparameter ermittelten Umweltparametern zu kombinieren, um zumindest einen kombinierten Umweltparameter zu erhalten,
wobei der Datenempfänger (110) konfiguriert ist, um basierend auf einem Vergleich zwischen
- dem zumindest einen kombinieren Umweltparameter oder einem basierend auf dem zumindest einen kombinierten Umweltparameter ermittelten Umweltparameterverlauf, und
- dem Umweltparameterreferenzprofil (164), das den erwarteten Umweltparameter oder den erwarteten Umweltparameterverlauf in der Umgebung des Datensenders (130) beschreibt,
den Betriebszustand des Datensenders (130) oder die Komponente des Datensenders (130) zu erkennen.

5. Datenempfänger (110) nach einem der vorangehenden Ansprüche,
wobei das Umweltparameterreferenzprofil (164) im Vorfeld ermittelt ist.

6. Datenempfänger (110) nach einem der vorangehenden Ansprüche,
wobei der Datenempfänger (110) konfiguriert ist, um das Umweltparameterreferenzprofil (164) basierend auf zuvor erhaltenen Umweltparametern (114', 114") anzupassen.

7. Datenempfänger (110) nach einem der Ansprüche 1 bis 4,
wobei der Datenempfänger (110) konfiguriert ist, um das Umweltparameterreferenzprofil (164) basierend auf erhaltenen Umweltparametern eines anderen Datensenders (130) oder einer Gruppe von anderen Datensendern zu generieren.

8. Datenempfänger (110) nach einem der vorangehenden Ansprüche,
wobei es sich bei dem Betriebszustand um einen fehlerhaften Betriebszustand des Datensenders (130) oder einer Komponente des Datensenders (130) handelt.

9. Datenempfänger (110) nach einem der vorangehenden Ansprüche,
wobei der Datenempfänger (110) konfiguriert ist, um basierend auf dem Vergleich eine Lebensdauer einer Komponente des Datensenders (130) zu schätzen.

10. Datenempfänger (110) nach einem der vorangehenden Ansprüche,
wobei der Datenempfänger (110) konfiguriert ist, um basierend auf einem Vergleich zwischen
- dem zumindest einen ermittelten Signalparameter oder einem basierend auf dem zumindest einen ermittelten Signalparameter ermittelten Signalparameterverlauf, und
- einem Signalparameterreferenzprofil, das einen erwarteten Signalparameter oder einen erwarteten Signalparameterverlauf beschreibt,
den Betriebszustand des Datensenders (130) oder einer Komponente des Datensenders (130) zu erkennen,
wobei insbesondere vorgesehen ist, dass der ermittelte Signalparameterverlauf ferner auf zumindest einem zuvor ermittelten Signalparameter basiert.

11. Datenempfänger (110) nach einem der vorangehenden Ansprüche 3 bis 10, wobei der Datenempfänger (110) konfiguriert ist, um einen Signalparameter über das jeweilige Signal (120) mehrfach zu ermitteln, um einen Verlauf des Signalparameters zu ermitteln, und um basierend auf dem ermittelten Verlauf des Signalparameters den Umweltparameterverlauf (168) zu ermitteln, dem der Taktgeber (134) des Datensenders (130) oder das jeweilige Signal (120) ausgesetzt ist,
wobei der Datenempfänger (110) konfiguriert ist, um basierend auf dem Vergleich zwischen
- dem ermittelten Umweltparameterverlauf (168), und
- dem Umweltparameterreferenzprofil (164), das einen erwarteten Umweltparameterverlauf während der Aussendung des jeweiligen Signals (120) beschreibt, den Betriebszustand des Datensenders (130) oder der Komponente des Datensenders (130) zu erkennen,
wobei insbesondere vorgesehen ist, dass das Umweltparameterreferenzprofil (164) Verzögerungen in einer Auswirkung von Umweltparameteränderungen auf den Taktgeber (134) berücksichtigt.

12. Datenempfänger (110) nach einem der vorangehenden Ansprüche,
wobei der Datenempfänger (110) konfiguriert ist, um einen Signalparameter des jeweiligen Signals (120) zu ermitteln und um basierend auf dem ermittelten Signalparameter oder einer Veränderung des Signalparameters eine auf dem Datensender (130) verbaute Komponente zu ermitteln,
wobei insbesondere vorgesehen ist, dass das zumindest eine Signal (120) in der modulierten Primärinformation eine Information über die verbaute Komponente aufweist und der Datenempfänger (110) konfiguriert ist, um basierend auf der Information über die verbaute Komponente eine Gegenprobe mit der über den Signalparameter oder die Veränderung des Signalparameters ermittelten verbauten Komponente durchzuführen.

13. Datenempfänger (110) nach Anspruch 12,
wobei der Datenempfänger (110) konfiguriert ist, um basierend auf der ermittelten verbauten Komponente eine Manipulation oder Fehlinstallation des Datensenders (130) zu erkennen.

14. Datenempfänger (110) nach einem der vorangehenden Ansprüche,
wobei der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben ist.

15. Datenempfänger (110),
wobei der Datenempfänger (110) konfiguriert ist, um zumindest ein Signal (120) eines Datensenders (130) zu empfangen, wobei das zumindest eine Signal (120) jeweils in einer modulierten Primärinformation einen von dem Datensender (130) gemessenen Umweltparameter aufweist,
wobei der Datenempfänger (110) konfiguriert ist, um den jeweiligen gemessenen Umweltparameter aus der jeweiligen modulierten Primärinformation (118) zu extrahieren, um zumindest einen gemessenen Umweltparameter (114_1) zu erhalten,
wobei das zumindest eine Signal (120) oder eine Erzeugung des zumindest einen Signals von einem Taktsignal (132) eines Taktgebers (134) des Datensenders (130) abhängig ist,
**dadurch gekennzeichnet, dass** der Datenempfänger (110) konfiguriert ist, um jeweils einen Signalparameter (112) des zumindest einen Signals (120) zu ermitteln, und um basierend auf dem jeweiligen Signalparameter (112) einen jeweiligen Umweltparameter zu schätzen, dem der Taktgeber des Datensenders (130) oder das jeweilige Signal (120) ausgesetzt ist, um zumindest einen geschätzten Umweltparameter (114_2) zu erhalten, wobei der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben ist,
wobei der Datenempfänger (110) konfiguriert, um basierend auf einem Vergleich zwischen dem zumindest einem gemessenen Umweltparameter (114_1) und dem zumindest einen geschätzten Umweltparameter (114_2) einen Betriebszustand des Datensenders (130) oder einer Komponente des Datensenders (130) zu erkennen.

16. Datenempfänger (110) nach einem der vorangehenden Ansprüche,
wobei der Datenempfänger (110) ein Datenempfänger eines drahtlosen Kommunikationssystems, eine Basisstation und/oder ein Sensorknoten ist.

17. Datenempfänger (110) nach Anspruch 16, wobei die Umweltparameter durch einen mit der Basisstation verbundenen Server ermittelt werden.

18. Verfahren (200) zur Erkennung des Betriebszustand eines Datensenders durch Überwachung von Umweltparametern, mit folgenden Schritten:
Empfangen (202) zumindest eines Signals eines Datensenders, um zumindest einen Umweltparameter des Datensenders oder einer Umgebung des Datensenders zu erhalten,
Ermitteln (204) eines Betriebszustands des Datensenders oder einer Komponente des Datensenders basierend auf einem Vergleich zwischen
- dem zumindest einen Umweltparameter oder einem basierend auf dem zumindest einem Umweltparameter ermittelten Umweltparameterverlauf, und
- einem Umweltparameterreferenzprofil, das einen erwarteten Umweltparameter oder einen erwarteten Umweltparameterverlauf in der Umgebung des Datensenders beschreibt,
wobei insbesondere vorgesehen ist, dass der Schritt des Empfangens des zumindest einen Signals von einer Basisstation eines Kommunikationssystems durchgeführt wird und/oder der Schritt des Ermittelns der Abweichung des Datensenders von einem Sollbetriebszustand von dem Datenempfänger oder einem Server des Kommunikationssystems durchgeführt wird **dadurch gekennzeichnet, dass** das zumindest eine Signal den jeweiligen Umweltparameter in einer modulierten Primärinformation aufweist und der Datenempfänger konfiguriert ist, um einen jeweiligen
Signalparameter aus der modulierten Primärinformation zu extrahieren, um den zumindest einen Umweltparameter zu erhalten,
wobei die modulierte Primärinformation eine ID des Datensenders, eine Synchronisationssequenz, Nutzdaten und/oder Dummy-Daten repräsentiert, und
wobei der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben ist.

19. Verfahren (220) zur Erkennung des Betriebszustand eines Datensenders durch Überwachung von Umweltparametern, mit folgenden Schritten:
Empfangen (222) zumindest eines Signals eines Datensenders, wobei das zumindest eine Signal oder eine Erzeugung des zumindest einen Signals von einem Taktsignal eines Taktgebers des Datensenders abhängig ist, wobei das zumindest eine Signal in einer modulierten Primärinformation einen von dem Datensender gemessenen Umweltparameter aufweist,
Extrahieren (224) des gemessenen Umweltparameters aus der modulierten Primärinformation des zumindest einen Signals, um zumindest einen gemessenen Umweltparameter zu erhalten,
Ermitteln (226) eines Signalparameters des zumindest einen Signals, wobei der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben ist,
Schätzen (228) eines Umweltparameters, dem der Taktgeber des Datensenders oder das jeweilige Signal ausgesetzt ist, basierend auf dem ermittelten Signalparameter, um zumindest einen geschätzten Umweltparameter zu erhalten, und
Vergleichen (230) des zumindest einen gemessenen Umweltparameters und des zumindest einen geschätzten Umweltparameters, um einen Betriebszustand des Datensenders oder einer Komponente des Datensenders zu erkennen.

## Claims

1. Data receiver (110),
wherein the data receiver (110) is configured to receive at least one signal (120) of a data transmitter (130) in order to obtain at least one environmental parameter of the data transmitter (130) or of surroundings of the data transmitter (130),
wherein the data receiver (110) is configured to take a comparison between
- the at least one obtained environmental parameter (114) or an environmental parameter trend (168) ascertained on the basis of the at least one obtained environmental parameter (114) and
- an environmental parameter reference profile (164) describing an expected environmental parameter or an expected environmental parameter trend in the surroundings of the data transmitter (130)
as a basis for detecting an operating state of the data transmitter (130) or of a component of the data transmitter (130), **characterized in that** the at least one signal (120) comprises the respective environmental parameter in a piece of modulated primary information and the data receiver (110) is configured to extract a respective signal parameter from the modulated primary information in order to obtain the at least one environmental parameter (114),
wherein the modulated primary information represents an ID of the data transmitter, a synchronization sequence, payload data and/or dummy data, and
wherein the signal parameter is
- a reception carrier frequency,
- a reception time,
- a reception symbol rate,
- a reception modulation index,
- a Doppler frequency,
- a signal-to-noise ratio,
- a signal power,
- a channel phase,
- a channel attenuation,
- a channel dispersion and/or
- a polarization rotation
or a change therein.

2. Data receiver (110) according to the preceding claim,
wherein the ascertained environmental parameter trend (168) is further based on at least one previously obtained environmental parameter (114', 114").

3. Data receiver (110) according to either of Claims 1 and 2,
wherein the at least one signal (120) or generation of the at least one signal is dependent on a clock signal (132) of a clock generator (134) of the data transmitter (130), and the data receiver (110) is configured to ascertain the signal parameter of the respective signal (120) and to take the signal parameter as a basis for ascertaining the respective environmental parameter (114) to which the clock generator (134) of the data transmitter (130) or the respective signal (120) is subjected.

4. Data receiver (110) according to Claim 3,
wherein the data receiver (110) is configured to combine the at least one environmental parameter extracted from the modulated primary information and the at least one environmental parameter ascertained on the basis of the signal parameter in order to obtain at least one combined environmental parameter,
wherein the data receiver (110) is configured to take a comparison between
- the at least one combined environmental parameter or an environmental parameter trend ascertained on the basis of the at least one combined environmental parameter and
- the environmental parameter reference profile (164) describing the expected environmental parameter or the expected environmental parameter trend in the surroundings of the data transmitter (130)
as a basis for detecting the operating state of the data transmitter (130) or of the component of the data transmitter (130).

5. Data receiver (110) according to one of the preceding claims,
wherein the environmental parameter reference profile (164) is ascertained in advance.

6. Data receiver (110) according to one of the preceding claims,
wherein the data receiver (110) is configured to adapt the environmental parameter reference profile (164) on the basis of previously obtained environmental parameters (114', 114").

7. Data receiver (110) according to one of Claims 1 to 4,
wherein the data receiver (110) is configured to generate the environmental parameter reference profile (164) on the basis of obtained environmental parameters of another data transmitter (130) or of a group of other data transmitters.

8. Data receiver (110) according to one of the preceding claims,
wherein the operating state is an erroneous operating state of the data transmitter (130) or of a component of the data transmitter (130).

9. Data receiver (110) according to one of the preceding claims,
wherein the data receiver (110) is configured to take the comparison as a basis for estimating a life of a component of the data transmitter (130).

10. Data receiver (110) according to one of the preceding claims,
wherein the data receiver (110) is configured to take a comparison between
- the at least one ascertained signal parameter or a signal parameter trend ascertained on the basis of the at least one ascertained signal parameter and
- a signal parameter reference profile describing an expected signal parameter or an expected signal parameter trend
as a basis for detecting the operating state of the data transmitter (130) or of a component of the data transmitter (130),
wherein there is in particular provision for the ascertained signal parameter trend to be further based on at least one previously ascertained signal parameter.

11. Data receiver (110) according to one of the preceding Claims 3 to 10,
wherein the data receiver (110) is configured to ascertain a signal parameter for the respective signal (120) repeatedly in order to ascertain a trend in the signal parameter, and to take the ascertained trend in the signal parameter as a basis for ascertaining the environmental parameter trend (168) to which the clock generator (134) of the data transmitter (130) or the respective signal (120) is subjected,
wherein the data receiver (110) is configured to take the comparison between
- the ascertained environmental parameter trend (168) and
- the environmental parameter reference profile (164) describing an expected environmental parameter trend during the transmission of the respective signal (120)
as a basis for detecting the operating state of the data transmitter (130) or of the component of the data transmitter (130),
wherein there is in particular provision for the environmental parameter reference profile (164) to take account of delays in an effect of environmental parameter changes on the clock generator (134).

12. Data receiver (110) according to one of the preceding claims,
wherein the data receiver (110) is configured to ascertain a signal parameter of the respective signal (120) and to take the ascertained signal parameter or a change in the signal parameter as a basis for ascertaining a component installed on the data transmitter (130),
wherein there is in particular provision for the at least one signal (120) to comprise a piece of information about the installed component in the modulated primary information and for the data receiver (110) to be configured to take the information about the installed component as a basis for carrying out a cross-check with the installed component ascertained by way of the signal parameter or the change in the signal parameter.

13. Data receiver (110) according to Claim 12,
wherein the data receiver (110) is configured to take the ascertained installed component as a basis for detecting tampering with or incorrect installation of the data transmitter (130).

14. Data receiver (110) according to one of the preceding claims,
wherein the environmental parameter is
- a temperature,
- a humidity,
- an atmospheric pressure,
- an electromagnetic radiation,
- a brightness,
- a motion and/or
- a vibration
or a change therein.

15. Data receiver (110),
wherein the data receiver (110) is configured to receive at least one signal (120) of a data transmitter (130), the at least one signal (120) comprising an environmental parameter, measured by the data transmitter (130), in a respective piece of modulated primary information,
wherein the data receiver (110) is configured to extract the respective measured environmental parameter from the respective modulated primary information (118) in order to obtain at least one measured environmental parameter (114_1),
wherein the at least one signal (120) or generation of the at least one signal is dependent on a clock signal (132) of a clock generator (134) of the data transmitter (130),
**characterized in that** the data receiver (110) is configured to ascertain a respective signal parameter (112) of the at least one signal (120), and to take the respective signal parameter (112) as a basis for estimating a respective environmental parameter to which the clock generator of the data transmitter (130) or the respective signal (120) is subjected in order to obtain at least one estimated environmental parameter (114_2), the signal parameter being
- a reception carrier frequency,
- a reception time,
- a reception symbol rate,
- a reception modulation index,
- a Doppler frequency,
- a signal-to-noise ratio,
- a signal power,
- a channel phase,
- a channel attenuation,
- a channel dispersion and/or
- a polarization rotation
or a change therein,
wherein the data receiver (110) is configured to take a comparison between the at least one measured environmental parameter (114 1) and the at least one estimated environmental parameter (114 2) as a basis for detecting an operating state of the data transmitter (130) or of a component of the data transmitter (130).

16. Data receiver (110) according to one of the preceding claims,
wherein the data receiver (110) is a data receiver of a wireless communication system, a base station and/or a sensor node.

17. Data receiver (110) according to Claim 16, wherein the environmental parameters are ascertained by a server connected to the base station.

18. Method (200) for detecting the operating state of a data transmitter by monitoring environmental parameters, having the following steps:
receiving (202) at least one signal of a data transmitter in order to obtain at least one environmental parameter of the data transmitter or of surroundings of the data transmitter,
ascertaining (204) an operating state of the data transmitter or of a component of the data transmitter on the basis of a comparison between
- the at least one environmental parameter or an environmental parameter trend ascertained on the basis of the at least one environmental parameter and
- an environmental parameter reference profile describing an expected environmental parameter or an expected environmental parameter trend in the surroundings of the data transmitter,
wherein there is in particular provision for the step of receiving the at least one signal to be carried out by a base station of a communication system and/or for the step of ascertaining the deviation of the data transmitter from a desired operating state to be carried out by the data receiver or a server of the communication system, **characterized in that** the at least one signal comprises the respective environmental parameter in a piece of modulated primary information and the data receiver is configured to extract a respective signal parameter from the modulated primary information in order to obtain the at least one environmental parameter,
wherein the modulated primary information represents an ID of the data transmitter, a synchronization sequence,
payload data and/or dummy data, and
wherein the signal parameter is
- a reception carrier frequency,
- a reception time,
- a reception symbol rate,
- a reception modulation index,
- a Doppler frequency,
- a signal-to-noise ratio,
- a signal power,
- a channel phase,
- a channel attenuation,
- a channel dispersion and/or
- a polarization rotation
or a change therein.

19. Method (220) for detecting the operating state of a data transmitter by monitoring environmental parameters, having the following steps:
receiving (222) at least one signal of a data transmitter, the at least one signal or generation of the at least one signal being dependent on a clock signal of a clock generator of the data transmitter,
the at least one signal comprising an environmental parameter, measured by the data transmitter, in a piece of modulated primary information,
extracting (224) the measured environmental parameter from the modulated primary information of the at least one signal in order to obtain at least one measured environmental parameter,
ascertaining (226) a signal parameter of the at least one signal, the signal parameter being
- a reception carrier frequency,
- a reception time,
- a reception symbol rate,
- a reception modulation index,
- a Doppler frequency,
- a signal-to-noise ratio,
- a signal power,
- a channel phase,
- a channel attenuation,
- a channel dispersion and/or
- a polarization rotation
or a change therein,
estimating (228) an environmental parameter to which the clock generator of the data transmitter or the respective signal is subjected on the basis of the ascertained signal parameter in order to obtain at least one estimated environmental parameter, and
comparing (230) the at least one measured environmental parameter and the at least one estimated environmental parameter in order to detect an operating state of the data transmitter or of a component of the data transmitter.

## Revendications

1. Récepteur de données (110),
le récepteur de données (110) étant conçu pour recevoir au moins un signal (120) d'un émetteur de données (130) afin d'obtenir au moins un paramètre d'environnement de l'émetteur de données (130) ou un environnement de l'émetteur de données (130),
le récepteur de données (110) étant conçu pour reconnaître un état de fonctionnement de l'émetteur de données (130) ou d'un composant de l'émetteur de données (130) sur la base d'une comparaison entre
- l'au moins un paramètre d'environnement obtenu (114) ou une courbe de paramètres d'environnement (168) déterminée sur la base de l'au moins un paramètre d'environnement obtenu (114), et
- un profil de référence de paramètre d'environnement (164), qui décrit un paramètre d'environnement attendu ou une courbe de paramètre d'environnement attendue dans l'environnement de l'émetteur de données (130), **caractérisé en ce que**
l'au moins un signal (120) a le paramètre d'environnement respectif dans une information primaire modulée et le récepteur de données (110) est conçu pour extraire un paramètre de signal respectif de l'information primaire modulée afin d'obtenir l'au moins un paramètre d'environnement (114),
l'information primaire modulée représentant un identifiant de l'émetteur de données, une séquence de synchronisation, des données utiles et/ou des données factices, et
le paramètre de signal étant
- une fréquence de porteuse de réception,
- un instant de réception,
- un taux de symbole de réception,
- un indice de modulation de réception,
- une fréquence Doppler,
- un rapport signal sur bruit,
- une puissance de signal,
- une phase de canal,
- une atténuation de canal,
- une dispersion de canal et/ou
- une rotation de polarisation
ou une variation de celles-ci ou de ceux-ci.

2. Récepteur de données (110) selon la revendication précédente,
la courbe de paramètre d'environnement déterminée (168) étant en outre basée sur au moins un paramètre d'environnement obtenu précédemment (114', 114").

3. Récepteur de données (110) selon l'une des revendications 1 et 2,
l'au moins un signal (120) ou une génération de l'au moins un signal dépendant d'un signal d'horloge (132) d'un générateur d'horloge (134) de l'émetteur de données (130) et le récepteur de données (110) étant conçu pour déterminer le paramètre de signal du signal respectif (120) et, sur la base du paramètre de signal, pour déterminer le paramètre d'environnement respectif (114) auquel le générateur d'horloge (134) de l'émetteur de données (130) ou le signal respectif (120) est soumis.

4. Récepteur de données (110) selon la revendication 3,
le récepteur de données (110) étant conçu pour combiner l'au moins un paramètre d'environnement extrait de l'information primaire modulée et l'au moins un paramètre d'environnement déterminé sur la base du paramètre de signal afin d'obtenir au moins un paramètre d'environnement combiné,
le récepteur de données (110) étant conçu pour reconnaître l'état de fonctionnement de l'émetteur de données (130) ou du composant de l'émetteur de données (130) sur la base d'une comparaison entre
- l'au moins un paramètre d'environnement combiné ou une courbe de paramètre d'environnement déterminée sur la base de l'au moins un paramètre d'environnement combiné, et
- le profil de référence de paramètre d'environnement (164), qui décrit le paramètre d'environnement attendu ou la courbe de paramètre d'environnement attendue dans l'environnement de l'émetteur de données (130).

5. Récepteur de données (110) selon l'une des revendications précédentes,
le profil de référence de paramètre d'environnement (164) étant déterminé à l'avance.

6. Récepteur de données (110) selon l'une des revendications précédentes,
le récepteur de données (110) étant conçu pour adapter le profil de référence de paramètre d'environnement (164) sur la base de paramètres d'environnement obtenus précédemment (114', 114").

7. Récepteur de données (110) selon l'une des revendications 1 à 4,
le récepteur de données (110) étant conçu pour générer le profil de référence de paramètre d'environnement (164) sur la base de paramètres d'environnement obtenus d'un autre émetteur de données (130) ou d'un groupe d'autres émetteurs de données.

8. Récepteur de données (110) selon l'une des revendications précédentes,
l'état de fonctionnement étant un état de fonctionnement défectueux de l'émetteur de données (130) ou d'un composant de l'émetteur de données (130).

9. Récepteur de données (110) selon l'une des revendications précédentes,
le récepteur de données (110) étant conçu pour estimer une durée de vie d'un composant de l'émetteur de données (130) sur la base de la comparaison.

10. Récepteur de données (110) selon l'une des revendications précédentes,
le récepteur de données (110) étant conçu pour reconnaître l'état de fonctionnement de l'émetteur de données (130) ou d'un composant de l'émetteur de données (130) sur la base d'une comparaison entre
- l'au moins un paramètre de signal déterminé ou une courbe de paramètre de signal déterminée sur la base de l'au moins un paramètre de signal déterminé, et
- un profil de référence de paramètre de signal, qui décrit un paramètre de signal attendu ou une courbe de paramètre de signal attendue,
la courbe de paramètre de signal déterminée étant prévue en particulier pour être en outre basée sur au moins un paramètre de signal préalablement déterminé.

11. Récepteur de données (110) selon l'une des revendications précédentes 3 à 10,
le récepteur de données (110) étant conçu pour déterminer plusieurs fois un paramètre de signal par le biais du signal respectif (120) afin de déterminer, sur la base de la courbe déterminée du paramètre de signal, la courbe de paramètre d'environnement (168) à laquelle le générateur d'horloge (134) de l'émetteur de données (130) ou le signal respectif (120) est soumis,
le récepteur de données (110) étant conçu pour reconnaître l'état de fonctionnement de l'émetteur de données (130) ou du composant de l'émetteur de données (130) sur la base de la comparaison entre
- la courbe de paramètre d'environnement déterminée (168), et
- le profil de référence de paramètre d'environnement (164), qui décrit une courbe de paramètre d'environnement attendue pendant l'émission du signal respectif (120), le profil de référence de paramètre d'environnement (164) étant prévu en particulier pour prendre en compte des retards d'un effet des variations de paramètre d'environnement sur le générateur d'horloge (134).

12. Récepteur de données (110) selon l'une des revendications précédentes,
le récepteur de données (110) étant conçu pour déterminer un paramètre de signal du signal respectif (120) et pour déterminer un composant intégré dans l'émetteur de données (130) sur la base du paramètre de signal déterminé ou d'une variation du paramètre de signal, l'au moins un signal (120) étant prévu en particulier pour comporter dans l'information primaire modulée une information sur le composant intégré et le récepteur de données (110) étant conçu pour effectuer, sur la base de l'information sur le composant intégré, un contre-test avec le composant intégré déterminé par le biais du paramètre de signal ou de la variation du paramètre de signal.

13. Récepteur de données (110) selon la revendication 12,
le récepteur de données (110) étant conçu pour reconnaître une manipulation ou une installation incorrecte de l'émetteur de données (130) sur la base du composant intégré déterminé.

14. Récepteur de données (110) selon l'une des revendications précédentes,
le paramètre d'environnement étant
- une température,
- une humidité de l'air,
- une pression atmosphérique,
- un rayonnement électromagnétique,
- une luminosité,
- un mouvement et/ou
- une vibration
ou une variation de celles-ci ou de ceux-ci.

15. Récepteur de données (110),
le récepteur de données (110) étant conçu pour recevoir au moins un signal (120) d'un émetteur de données (130), l'au moins un signal (120) comportant un paramètre d'environnement mesuré par l'émetteur de données (130) à chaque fois dans une information primaire,
le récepteur de données (110) étant conçu pour extraire le paramètre d'environnement mesuré respectif de l'information primaire modulée respective (118) afin d'obtenir au moins un paramètre d'environnement mesuré (114_1),
l'au moins un signal (120) ou une génération de l'au moins un signal dépendant d'un signal d'horloge (132) d'un générateur d'horloge (134) de l'émetteur de données (130),
**caractérisé en ce que** le récepteur de données (110) est conçu pour déterminer un paramètre de signal respectif (112) de l'au moins un signal (120) et, sur la base du paramètre de signal respectif (112), pour estimer un paramètre d'environnement respectif auquel le générateur d'horloge de l'émetteur de données (130) ou le signal respectif (120) est soumis afin d'obtenir au moins un paramètre d'environnement estimé (114_2), le paramètre de signal étant
- une fréquence de porteuse de réception,
- un instant de réception,
- un taux de symbole de réception,
- un indice de modulation de réception,
- une fréquence Doppler,
- un rapport signal sur bruit,
- une puissance de signal,
- une phase de canal,
- une atténuation de canal,
- une dispersion de canal et/ou
- une rotation de polarisation
ou une variation de celles-ci ou de ceux-ci,
le récepteur de données (110) étant conçu pour reconnaître un état de fonctionnement de l'émetteur de données (130) ou d'un composant de l'émetteur de données (130) sur la base d'une comparaison entre l'au moins un paramètre d'environnement mesuré (114_1) et l'au moins un paramètre d'environnement estimé (114_2).

16. Récepteur de données (110) selon l'une des revendications précédentes,
le récepteur de données (110) étant un récepteur de données d'un système de communication sans fil, une station de base et/ou un nœud de capteur.

17. Récepteur de données (110) selon la revendication 16, les paramètres d'environnement étant déterminés par un serveur relié à la station de base.

18. Procédé (200) de reconnaissance de l'état de fonctionnement d'un émetteur de données par surveillance des paramètres d'environnement, ledit procédé comportant les étapes suivantes :
recevoir (202) au moins un signal d'un émetteur de données afin d'obtenir au moins un paramètre d'environnement de l'émetteur de données ou un environnement de l'émetteur de données,
déterminer (204) un état de fonctionnement de l'émetteur de données ou d'un composant de l'émetteur de données sur la base d'une comparaison entre
- l'au moins un paramètre d'environnement ou une courbe de paramètre d'environnement déterminée sur la base de l'au moins un paramètre d'environnement, et
- un profil de référence de paramètre d'environnement, qui décrit un paramètre d'environnement attendu ou une variation de paramètre d'environnement attendue dans l'environnement de l'émetteur de données,
l'étape de réception de l'au moins un signal étant prévue notamment pour être réalisée par une station de base d'un système de communication et/ou l'étape de détermination de l'écart de l'émetteur de données par rapport à un état de fonctionnement cible étant prévue notamment pour être réalisée par le récepteur de données ou un serveur du système de communication, **caractérisé en ce que** l'au moins un signal comporte le paramètre d'environnement respectif dans une informations primaire modulée et le récepteur de données est conçu pour extraire un paramètre de signal respectif de l'information primaire modulée afin d'obtenir l'au moins un paramètre d'environnement,
l'information primaire modulée représentant un identifiant de l'émetteur de données, une séquence de synchronisation, des données utiles et/ou des données factices, et
le paramètre de signal étant
- une fréquence de porteuse de réception,
- un instant de réception,
- un taux de symbole de réception,
- un indice de modulation de réception,
- une fréquence Doppler,
- un rapport signal sur bruit,
- une puissance de signal,
- une phase de canal,
- une atténuation de canal,
- une dispersion de canal et/ou
- une rotation de polarisation
ou une variation de celles-ci ou de ceux-ci.

19. Procédé (220) de reconnaissance de l'état de fonctionnement d'un émetteur de données par surveillance de paramètres d'environnement, ledit procédé comprenant les étapes suivantes :
recevoir (222) au moins un signal d'un émetteur de données, l'au moins un signal ou une génération de l'au moins un signal dépendant d'un signal d'horloge d'un générateur d'horloge de l'émetteur de données, l'au moins un signal comportant dans une information primaire modulée un paramètre d'environnement mesuré par l'émetteur de données,
extraire (224) le paramètre d'environnement mesuré de l'information primaire modulée de l'au moins un signal afin d'obtenir au moins un paramètre d'environnement mesuré,
déterminer (226) un paramètre de signal de l'au moins un signal, le paramètre de signal étant
- une fréquence de porteuse de réception,
- un instant de réception,
- un taux de symbole de réception,
- un indice de modulation de réception,
- une fréquence Doppler,
- un rapport signal sur bruit,
- une puissance de signal,
- une phase de canal,
- une atténuation de canal,
- une dispersion de canal et/ou
- une rotation de polarisation
ou une variation de celles-ci ou de ceux-ci,
estimer (228) un paramètre d'environnement, auquel le générateur d'horloge de l'émetteur de données ou le signal respectif est soumis, sur la base du paramètre de signal déterminé afin d'obtenir au moins un paramètre d'environnement estimé, et
comparer (230) l'au moins un paramètre d'environnement mesuré et l'au moins un paramètre d'environnement estimé afin de reconnaître un état de fonctionnement de l'émetteur de données ou d'un composant de l'émetteur de données.
